# EUROPEAN PATENT APPLICATION

(11) **EP 4 198 873 A1**
(43) Date of publication of application: **21.06.2023**
(21) Application number: 22213976.8
(22) Date of filing: 15.12.2022
(51) Int. Cl.: G06T 3/40, G06T 19/00, H04N 1/48

(54) **SPARSE RGB FILTER HARDWARE ACCELERATOR**

(30) Priority: 17.12.2021 US 202117554594
(71) Applicant: META PLATFORMS TECHNOLOGIES, LLC, Menlo Park, CA 94025 (US)
(72) Inventor: ROBERTSON, John Enders, Menlo Park, 94025 (US)
(74) Representative: Murgitroyd & Company

(57) **Abstract**

A hardware accelerator includes a local buffer configured to receive and store stream data of a sparse color image that includes pixel data of panchromatic pixels and pixel data of color pixels, a first circuit configured to generate pixel data of a monochromatic image using the stream data received and stored in the local buffer while the local buffer continues to receive and store the stream data of the sparse color image, and a second circuit configured to generate pixel data of a Bayer color image using the stream data of the sparse color image received and stored in the local buffer and the pixel data of the monochromatic image while the local buffer continues to receive and store the stream data of the sparse color image.

## Description

### TECHNICAL FIELD

This disclosure relates generally to image processing. More specifically, this disclosure relates to hardware accelerators.

### BACKGROUND

An artificial reality system, such as a head-mounted display (HMD) or heads-up display (HUD) system, generally includes a near-eye display system in the form of a headset or a pair of glasses. The near-eye display system may be configured to present content to a user via an electronic or optic display that is within, for example, about 10-20 mm in front of the user's eyes. The artificial reality system may display virtual objects or combine images of real objects with virtual objects, as in virtual reality (VR), augmented reality (AR), or mixed reality (MR) applications. An artificial reality system may use multiple sensor devices (e.g., cameras) for capturing features of objects in the surrounding environment in order to provide artificial reality experience to users. The sensor devices may include image sensors for eye tracking, hand tracking, body tracking, scanning a surrounding environment, and the like. Information captured by the sensor devices may be sent to processors for image processing and image rendering.

### SUMMARY

This disclosure relates generally to image processing. More specifically, this disclosure relates to hardware accelerators for converting image streams captured by a sparse color image sensor into images that may be processed by image processors for image rendering in, for example, an artificial reality display system.

According to the present invention there is provided a device comprising a local buffer configured to receive and store stream data of a sparse color image, wherein the stream data of the sparse color image includes pixel data of panchromatic pixels and pixel data of color pixels, the panchromatic pixels and the color pixels arranged in the sparse color image according to a pattern; a first circuit configured to generate, while the local buffer continues to receive and store the stream data of the sparse color image, pixel data of a monochromatic image using the stream data received and stored in the local buffer; and a second circuit configured to generate, while the local buffer continues to receive and store the stream data of the sparse color image, pixel data of a Bayer color image using the stream data of the sparse color image received and stored in the local buffer and the pixel data of the monochromatic image.

Optionally, the device may also include a de-mosaic filter circuit configured to generate, from the Bayer color image, image frames for red, green, and blue channels of a full-color image.

Optionally, the local buffer may be configured to store pixel data of at least some pixels of the monochromatic image generated by the first circuit.

Optionally the second circuit may be configured to generate the pixel data of the Bayer color image using the pixel data of at least some pixels of the monochromatic image stored in the local buffer.

Optionally, the local buffer may include two or more line buffers, where each line buffer of the two or more line buffers may optionally include a plurality of shift registers, and the two or more line buffers may further optionally be cascaded.

The local buffer may optionally also include random-access memory configured to store pixel data of color pixels that has been shifted out of the two or more line buffers.

Optionally, the clock frequency of the first circuit (and/or the second circuit) may be lower than a clock frequency of the local buffer, such as about a half of the clock frequency of the local buffer.

Optionally, the first circuit may be configured to generate pixel data for a pixel of the monochromatic image corresponding to a color pixel of the sparse color image by performing operations that include: determining a first gradient based on pixel data of panchromatic pixels adjacent to and on the left of the color pixel and pixel data of panchromatic pixels adjacent to and on the right of the color pixel in the sparse color image; determining a second gradient based on pixel data of panchromatic pixels adjacent to and above the color pixel and pixel data of panchromatic pixels adjacent to and below the color pixel in the sparse color image; and setting the pixel data for the pixel of the monochromatic image to: an average of pixel data of two panchromatic pixels adjacent to and on a same row as the color pixel in the sparse color image in response to determining that the first gradient is less than the second gradient; or an average of pixel data of two panchromatic pixels adjacent to and in a same column as the color pixel in the sparse color image in response to determining that the first gradient is equal to or greater than the second gradient.

Optionally the first circuit may be configured to save the pixel data for the pixel in the monochromatic image to the local buffer for use by the second circuit.

Optionally, the second circuit may be configured to generate pixel data for green pixels of the Bayer color image based on pixel data of green pixels of the sparse color image, pixel data of pixels of the monochromatic image corresponding to the green pixels of the sparse color image, and pixel data of panchromatic pixels of the sparse color image corresponding to the green pixels of the Bayer color image.

The second circuit may optionally be configured to generate pixel data for blue pixels of the Bayer color image based on pixel data of blue pixels of the sparse color image, pixel data of pixels of the monochromatic image corresponding to the blue pixels of the sparse color image, and pixel data of panchromatic pixels of the sparse color image corresponding to the blue pixels of the Bayer color image.

The second circuit may optionally also be configured to generate pixel data for a set of red pixels of the Bayer color image based on pixel data of red pixels of the sparse color image, pixel data of pixels of the monochromatic image corresponding to the red pixels of the sparse color image, and pixel data of pixels of the monochromatic image corresponding to green or blue pixels of the sparse color image.

According to the present invention there is provided a display system comprising: an image sensor including a sparse color filter array and configured to capture a sparse color image of an environment of the display system, the sparse color image including panchromatic pixels and color pixels arranged according to a pattern of the sparse color filter array; an application processor configured to generate display data based on information in the sparse color image; and an accelerator on the image sensor, the application processor, or another device, the accelerator comprising: a local buffer configured to receive and store stream data of the sparse color image from the image sensor, a first circuit configured to generate, while the local buffer continues to receive and store the stream data of the sparse color image, pixel data of a monochromatic image using the stream data received and stored in the local buffer; and a second circuit configured to generate, while the local buffer continues to receive and store the stream data of the sparse color image, pixel data of a Bayer color image using the stream data received and stored in the local buffer and the pixel data of the monochromatic image.

In some embodiments of the display system, the local buffer may be configured to store pixel data of at least some pixels of the monochromatic image generated by the first circuit. Optionally the second circuit may be configured to generate the Bayer color image using the pixel data of at least some pixels of the monochromatic image stored in the local buffer.

Optionally, the local buffer may include two or more line buffers that are cascaded, each line buffer of the two or more line buffers including a plurality of shift registers.

Optionally, a clock frequency of the first circuit (and/or the second circuit) may be lower than (e.g., about a half of) a clock frequency of the local buffer.

Optionally, the accelerator may further include a de-mosaic filter circuit configured to generate, from the Bayer color image, image frames for red, green, and blue channels of a full-color image.

Optionally, the sparse color filter array may include a plurality of infrared filters that are configured to transmit infrared light and block visible light.

In some embodiments of the display system, the first circuit may be configured to generate the pixel data for a pixel of the monochromatic image corresponding to a color pixel of the sparse color image by performing operations that include: determining a first gradient based on pixel data of panchromatic pixels adjacent to and on the left of the color pixel and pixel data of panchromatic pixels adjacent to and on the right of the color pixel in the sparse color image; determining a second gradient based on pixel data of panchromatic pixels adjacent to and above the color pixel and pixel data of panchromatic pixels adjacent to and below the color pixel in the sparse color image; and setting the pixel data for the pixel of the monochromatic image to: an average of pixel data of two panchromatic pixels adjacent to and on a same row as the color pixel in the sparse color image (when the first gradient is less than the second gradient); or an average of pixel data of two panchromatic pixels adjacent to and on a same column as the color pixel in the sparse color image (when the first gradient is equal to or greater than the second gradient).

Optionally, the second circuit may be configured to: generate pixel data for green pixels of the Bayer color image based on pixel data of green pixels of the sparse color image, pixel data of pixels of the monochromatic image corresponding to the green pixels of the sparse color image, and pixel data of panchromatic pixels of the sparse color image corresponding to the green pixels of the Bayer color image; generate pixel data for blue pixels of the Bayer color image based on pixel data of blue pixels of the sparse color image, pixel data of pixels of the monochromatic image corresponding to the blue pixels of the sparse color image, and pixel data of panchromatic pixels of the sparse color image corresponding to the blue pixels of the Bayer color image; and generate pixel data for a set of red pixels of the Bayer color image based on pixel data of red pixels of the sparse color image, pixel data of pixels of the monochromatic image corresponding to the red pixels of the sparse color image, and pixel data of pixels of the monochromatic image corresponding to the green pixels or the blue pixels of the sparse color image.

According to the present invention there is provided a method comprising: storing, by a local buffer, stream data of a portion of a sparse color image, where the stream data of the portion of the sparse color image includes pixel data of panchromatic pixels and pixel data of color pixels, the panchromatic pixels and the color pixels arranged in the sparse color image according to a pattern; generating, by a first image filter, pixel data of a portion of a monochromatic image using the stream data of the portion of the sparse color image stored in the local buffer; saving, to the local buffer, pixel data of at least some pixels of the monochromatic image generated by the first image filter; and generating, by a second image filter, a portion of a Bayer color image using the stream data of the portion of the sparse color image stored in the local buffer and the pixel data of at least some pixels of the monochromatic image stored in the local buffer.

This summary is neither intended to identify key or essential features of the claimed subject matter, nor is it intended to be used in isolation to determine the scope of the claimed subject matter. The subject matter should be understood by reference to appropriate portions of the entire specification of this disclosure, any or all drawings, and each claim. The foregoing, together with other features and examples, will be described in more detail below in the following specification, claims, and accompanying drawings.

### BRIEF DESCRIPTION OF THE DRAWINGS

Illustrative embodiments are described in detail below with reference to the following figures.
FIG. 1 is a simplified block diagram of an example of an artificial reality system environment including a near-eye display according to certain embodiments.
FIG. 2A is a perspective view of an example of a near-eye display in the form of a head-mounted display (HMD) device for implementing some of the examples disclosed herein.
FIG. 2B is a cross section of a front rigid body of the HMD device of FIG. 2A.
FIG. 3 is a perspective view of an example of a near-eye display in the form of a pair of glasses for implementing some of the examples disclosed herein.
FIG. 4 is a simplified block diagram of an example of a near-eye display system according to certain embodiments.
FIG. 5A illustrates an example of a pattern of a Bayer color filter array (CFA) for a color image sensor.
FIG. 5B illustrates an example of a sparse CFA of a sparse color image sensor according to certain embodiments.
FIG. 5C illustrates another example of a sparse CFA of a sparse color image sensor according to certain embodiments.
FIG. 5D illustrates yet another example of a sparse CFA of a sparse color image sensor according to certain embodiments.
FIG. 6 illustrates an example of converting a sparse color image into images in red, green, blue, and panchromatic (white) channels according to certain embodiments.
FIG. 7A illustrates an example of converting a sparse color image into a monochromatic image according to certain embodiments.
FIG. 7B illustrates an example of an implementation of the sparse-to-monochromatic filter of FIG. 7A.
FIG. 8 illustrates an example of converting color pixels in a sparse color image into panchromatic (white) pixels according to certain embodiments.
FIG. 9 illustrates an example of buffering a stream of pixel data for sparse-to-monochromatic image conversion and sparse-to-Bayer (re-mosaic) image conversion according to certain embodiments.
FIG. 10 illustrates an example of converting a sparse color image into a Bayer color image according to certain embodiments.
FIG. 11 illustrates an example of converting an example of a sparse color image into a Bayer color image using a re-mosaic filter according to certain embodiments.
FIGS. 12A-12D illustrate an example of converting a sparse color image into a monochromatic image and a Bayer color image while sharing some local buffers according to certain embodiments.
FIG. 13 includes a table that shows row numbers of a Bayer color image generated by a re-mosaic filter after receiving input data of different rows of a sparse color image according to certain embodiments.
FIG. 14 includes a table that summarizes data used by a re-mosaic filter to convert a sparse color image into a Bayer color image according to certain embodiments
FIG. 15 includes a flowchart illustrating an example of a method of image processing in an artificial reality system according to certain embodiments.
FIG. 16 is a simplified block diagram of an electronic system of an example of a near-eye display according to certain embodiments.

The figures depict embodiments of the present disclosure for purposes of illustration only. One skilled in the art will readily recognize from the following description that alternative embodiments of the structures and methods illustrated may be employed without departing from the principles, or benefits touted, of this disclosure.

In the appended figures, similar components and/or features may have the same reference label. Further, various components of the same type may be distinguished by following the reference label by a dash and a second label that distinguishes among the similar components. If only the first reference label is used in the specification, the description is applicable to any one of the similar components having the same first reference label irrespective of the second reference label.

### DETAILED DESCRIPTION

Techniques disclosed herein relate generally to image processing. More specifically, this disclosure relates to hardware accelerators for converting image streams captured by a sparse color image sensor into images that can be processed by image processors for image rendering in, for example, artificial reality applications. Techniques disclosed herein may be used in artificial reality display systems, such as virtual reality (VR), augmented reality (AR), or mixed reality (MR) display systems, for image capturing, processing, and rendering. Various inventive embodiments are described herein, including systems, modules, circuits, devices, methods, instructions, code, machine-readable media, and the like.

Artificial reality is a form of reality that has been adjusted in some manners before being presented to a user. Artificial reality may include, for example, a virtual reality, an augmented reality, a mixed reality, a hybrid reality, or some combinations and/or derivatives thereof. Artificial reality content may include artificially generated content or generated content combined with captured (e.g., real-world) content. The artificial reality content may include video, audio, haptic feedback, or some combinations thereof, any of which may be presented in a single channel or in multiple channels (such as stereo video that produces a three-dimensional effect to the viewer). An artificial reality system that provides artificial reality content to users may be implemented on various platforms, including a head-mounted display (HMD) connected to a host computer system, a standalone HMD, a mobile device or computing system, or any other hardware platforms capable of providing artificial reality content to one or more viewers.

An artificial reality system, such as an HMD or heads-up display (HUD) system, generally includes a display for presenting artificial images that depict objects in a virtual environment to viewers. The display may present virtual objects or combine images of real objects with virtual objects. For example, in an AR system, a user may view both displayed images of virtual objects (e.g., computer-generated images (CGIs)) and the surrounding environment by, for example, seeing through transparent display glasses or lenses (often referred to as optical see-through) or viewing displayed images of the surrounding environment captured by a camera (often referred to as video see-through). In some artificial reality display systems, the orientation and/or location (collectively referred to as a position or pose) of a user's head, eyes, arms, and/or other body parts may be tracked, and, based on the position or pose of the user's body parts, images may be rendered by one or more image processors for displaying to the user by the display to provide artificial reality experience to the user.

To perform eye tracking, hand tracking, body tracking, scanning of the surrounding environment, and the like in an artificial reality system, multiple sensor devices (e.g., cameras or other image sensors) may be used to capture color images (e.g., for displaying environmental objects) and infrared images (e.g., for user tracking). The multiple sensor devices may increase the size, weight, and cost of the artificial reality system. In addition, a large amount of information may be captured by the sensor devices from the surrounding environment, and may need to be sent to processors for image processing and rendering. As such, the artificial reality system may need to have a high data transfer bandwidth, a large memory space, and a high processing power, and thus may have a high power consumption. Furthermore, conventional Bayer RGB color sensors may have low light conversion efficiencies due to losses caused by the Bayer color filter array (CFA), and thus may have low sensitivity and poor imaging performance in low-light environments.

According to certain embodiments, a sparse color image sensor may be used in an artificial reality system to simultaneous capturing red, green, and blue color images, white-light (e.g., gray scale) images, and/or infrared images. The sparse color image sensor may include mostly panchromatic pixels (also referred to as white or mono sensors) that do not include color filters and thus can capture light in a wide wavelength range. The sparse color image sensor may include a small percentage of color pixels that include color filters and thus may capture light in a narrow wavelength range (e.g., red, green, or blue light). Because of the small percentage of color pixels in the image sensor, the image sensor is referred to as a sparse color image sensor. The sparse color image sensor may provide better low-light imaging performance due to the high sensitivity panchromatic (white) pixels. A sparse color image captured by a sparse color image sensor in a single shot may include information of the red light, green light, blue light, infrared light, and intensity (or brightness) of an object or a scene, and may be sent to an application processor in an image stream in, for example, mobile industry processor interface (MIPI) RAW10 format. Thus, the number of sensor devices in the system, the size, weight, and cost of the system, and the bandwidth for transferring the data captured by the sensor devices may be reduced.

Many application processors, such as many general purpose processors, may not be able to directly process the output data of the sparse color image sensor in the raw data format. According to certain embodiments, a hardware accelerator including one or more image filter circuits, such as a sparse-to-monochromatic filter and a re-mosaic filter, may be implemented in the image sensor, the application processor, or an intermediary image conversion chip (e.g., a field-programmable gate array (FPGA) or an application specific integrated circuit (ASIC)) to convert the captured sparse color image into images in formats that may be processed by the application processor, such as a monochromic image, a Bayer RGB color image (or RGB channel images), and/or an infrared image.

In some embodiments, the image filter circuits may use a minimal buffer (e.g., RAM) space to minimize latency and reduce local memory requirements. The image filters may also share some buffers to further reduce chip area for local memory and power consumption. In some embodiments, outputs of a first image filter may be buffered and used by a second image filter to reduce the computation and latency of the second image filter. In some embodiments, the output ordering may be arranged to more efficiently share the buffers and reduce local memory usage. In some embodiments, the monochromic image, the Bayer RGB color image (or the RGB channel images), and/or the infrared image converted from a sparse color image may be combined into one or more output channels (e.g., MIPI transmitter interfaces). In some embodiments, MIPI virtual channels may be used to aggregate multiple streams on a single MIPI link.

Techniques disclosed herein may capture images in different wavelength bands in a single shot using a single sensor device, while achieving a high sensitivity. The captured data may be sent in one data stream for processing. The image filter circuits may convert the data stream including image data for multiple different wavelength bands into images in data formats that can be processed by conventional image processors. The image filter circuits may use a small amount of local memory, share some intermediate results, and operate at a lower clock frequency, and thus may have a reduced size, reduced latency, and lower power consumption.

In the following description, for the purposes of explanation, specific details are set forth in order to provide a thorough understanding of examples of the disclosure. However, it will be apparent that various examples may be practiced without these specific details. For example, devices, systems, structures, assemblies, methods, and other components may be shown as components in block diagram form in order not to obscure the examples in unnecessary detail. In other instances, well-known devices, processes, systems, structures, and techniques may be shown without necessary detail in order to avoid obscuring the examples. The figures and description are not intended to be restrictive. The terms and expressions that have been employed in this disclosure are used as terms of description and not of limitation, and there is no intention in the use of such terms and expressions of excluding any equivalents of the features shown and described or portions thereof. The word "example" is used herein to mean "serving as an example, instance, or illustration." Any embodiment or design described herein as "example" is not necessarily to be construed as preferred or advantageous over other embodiments or designs.

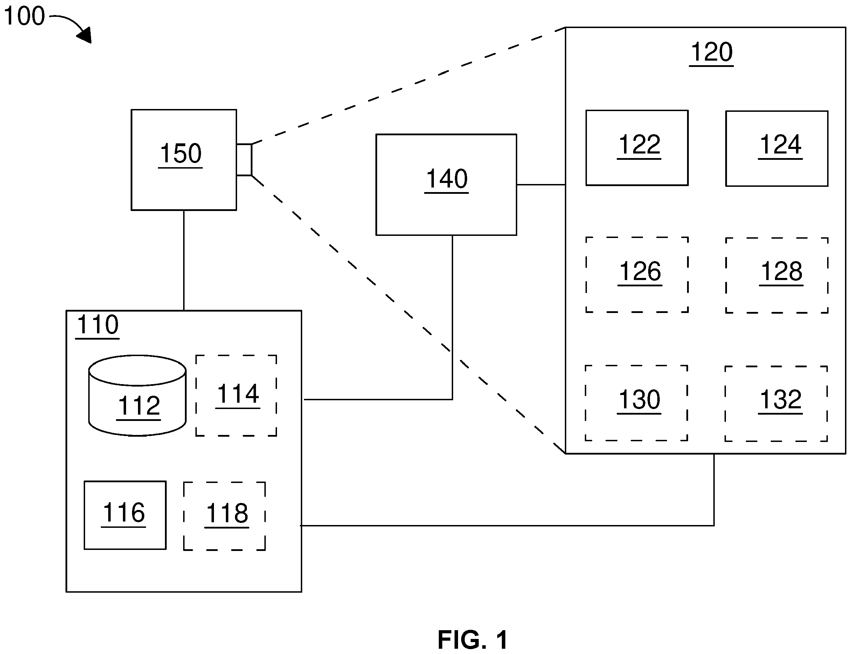

**FIG. 1** is a simplified block diagram of an example of an artificial reality system environment 100 including a near-eye display 120 in accordance with certain embodiments. Artificial reality system environment 100 shown in FIG. 1 may include near-eye display 120, an optional external imaging device 150, and an optional input/output interface 140, each of which may be coupled to an optional console 110. While FIG. 1 shows an example of artificial reality system environment 100 including one near-eye display 120, one external imaging device 150, and one input/output interface 140, any number of these components may be included in artificial reality system environment 100, or any of the components may be omitted. For example, there may be multiple near-eye displays 120 monitored by one or more external imaging devices 150 in communication with console 110. In some configurations, artificial reality system environment 100 may not include external imaging device 150, optional input/output interface 140, and optional console 110. In alternative configurations, different or additional components may be included in artificial reality system environment 100.

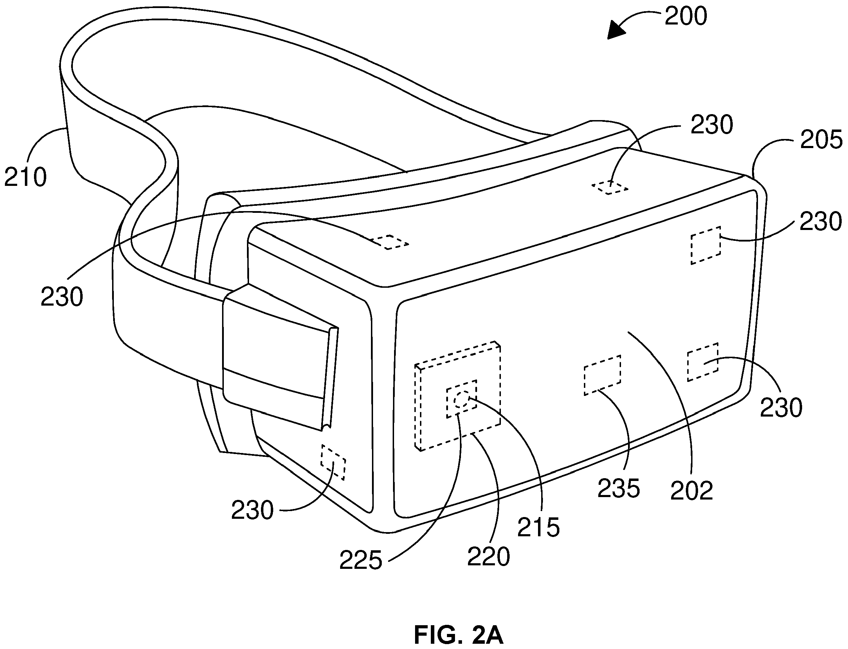

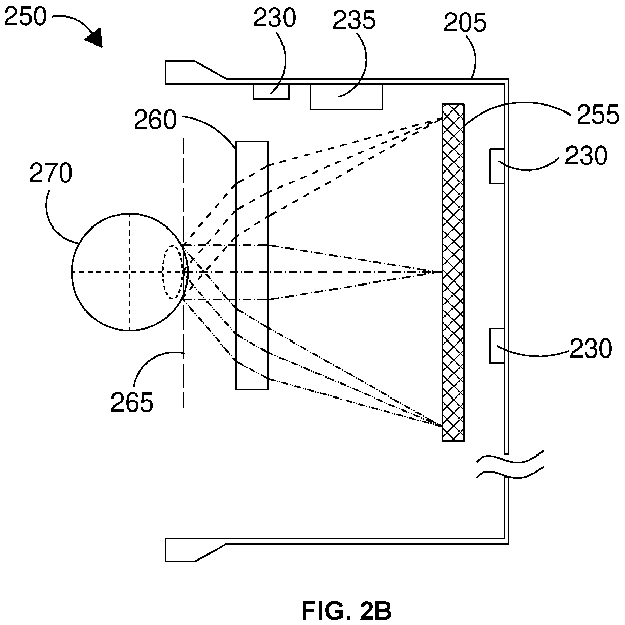

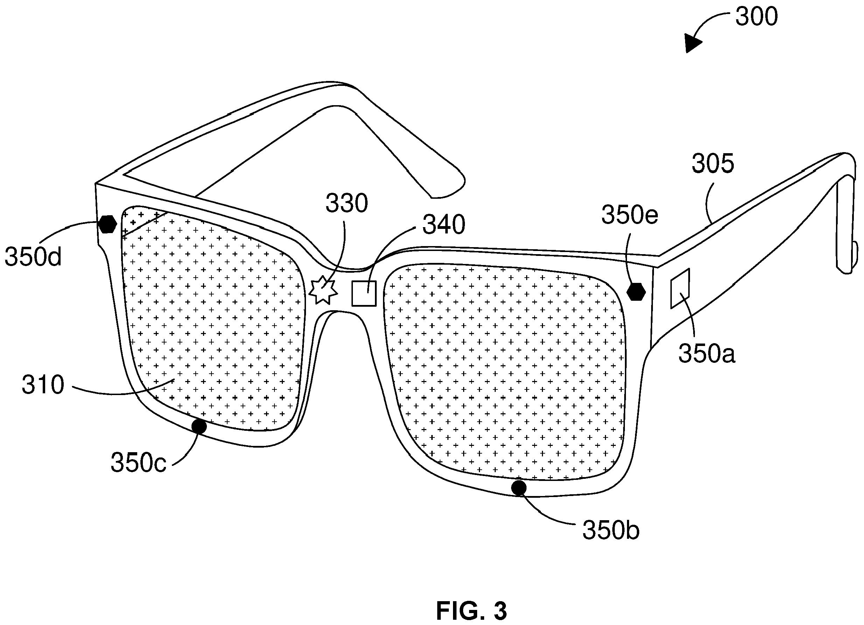

Near-eye display 120 may be a head-mounted display that presents content to a user. Examples of content presented by near-eye display 120 include one or more of images, videos, audio, or any combination thereof. In some embodiments, audio may be presented via an external device (e.g., speakers and/or headphones) that receives audio information from near-eye display 120, console 110, or both, and presents audio data based on the audio information. Near-eye display 120 may include one or more rigid bodies, which may be rigidly or non-rigidly coupled to each other. A rigid coupling between rigid bodies may cause the coupled rigid bodies to act as a single rigid entity. A non-rigid coupling between rigid bodies may allow the rigid bodies to move relative to each other. In various embodiments, near-eye display 120 may be implemented in any suitable form-factor, including a pair of glasses. Some embodiments of near-eye display 120 are further described below with respect to FIGS. 2 and 3. Additionally, in various embodiments, the functionality described herein may be used in a headset that combines images of an environment external to near-eye display 120 and artificial reality content (e.g., computer-generated images). Therefore, near-eye display 120 may augment images of a physical, real-world environment external to near-eye display 120 with generated content (e.g., images, video, sound, etc.) to present an augmented reality to a user.

In various embodiments, near-eye display 120 may include one or more of display electronics 122, display optics 124, and an eye-tracking unit 130. In some embodiments, near-eye display 120 may also include one or more locators 126, one or more position sensors 128, and an inertial measurement unit (IMU) 132. Near-eye display 120 may omit any of eye-tracking unit 130, locators 126, position sensors 128, and IMU 132, or include additional elements in various embodiments. Additionally, in some embodiments, near-eye display 120 may include elements combining the function of various elements described in conjunction with FIG. 1.

Display electronics 122 may display or facilitate the display of images to the user according to data received from, for example, console 110. In various embodiments, display electronics 122 may include one or more display panels, such as a liquid crystal display (LCD), an organic light emitting diode (OLED) display, an inorganic light emitting diode (ILED) display, a micro light emitting diode (µLED) display, an active-matrix OLED display (AMOLED), a transparent OLED display (TOLED), or some other display. For example, in one implementation of near-eye display 120, display electronics 122 may include a front TOLED panel, a rear display panel, and an optical component (e.g., an attenuator, polarizer, or diffractive or spectral film) between the front TOLED panel and rear display panels. Display electronics 122 may include pixels to emit light of a predominant color such as red, green, blue, white, or yellow. In some implementations, display electronics 122 may display a three-dimensional (3D) image through stereoscopic effects produced by two-dimensional panels to create a subjective perception of image depth. For example, display electronics 122 may include a left display and a right display positioned in front of a user's left eye and right eye, respectively. The left and right displays may present copies of an image shifted horizontally relative to each other to create a stereoscopic effect (i.e., a perception of image depth by a user viewing the image).

In certain embodiments, display optics 124 may display image content optically (e.g., using optical waveguides and couplers) or magnify image light received from display electronics 122, correct optical errors associated with the image light, and present the corrected image light to a user of near-eye display 120. In various embodiments, display optics 124 may include one or more optical elements, such as, for example, a substrate, optical waveguides, an aperture, a Fresnel lens, a convex lens, a concave lens, a filter, input/output couplers, or any other suitable optical elements that may affect image light emitted from display electronics 122. Display optics 124 may include a combination of different optical elements as well as mechanical couplings to maintain relative spacing and orientation of the optical elements in the combination. One or more optical elements in display optics 124 may have an optical coating, such as an anti-reflective coating, a reflective coating, a filtering coating, or a combination of different optical coatings.

Magnification of the image light by display optics 124 may allow display electronics 122 to be physically smaller, weigh less, and consume less power than larger displays. Additionally, magnification may increase a field of view of the displayed content. The amount of magnification of image light by display optics 124 may be changed by adjusting, adding, or removing optical elements from display optics 124. In some embodiments, display optics 124 may project displayed images to one or more image planes that may be further away from the user's eyes than near-eye display 120.

Display optics 124 may also be designed to correct one or more types of optical errors, such as two-dimensional optical errors, three-dimensional optical errors, or any combination thereof. Two-dimensional errors may include optical aberrations that occur in two dimensions. Example types of two-dimensional errors may include barrel distortion, pincushion distortion, longitudinal chromatic aberration, and transverse chromatic aberration. Three-dimensional errors may include optical errors that occur in three dimensions. Example types of three-dimensional errors may include spherical aberration, comatic aberration, field curvature, and astigmatism.

Locators 126 may be objects located in specific positions on near-eye display 120 relative to one another and relative to a reference point on near-eye display 120. In some implementations, console 110 may identify locators 126 in images captured by external imaging device 150 to determine the artificial reality headset's position, orientation, or both. A locator 126 may be an LED, a corner cube reflector, a reflective marker, a type of light source that contrasts with an environment in which near-eye display 120 operates, or any combination thereof. In embodiments where locators 126 are active components (e.g., LEDs or other types of light emitting devices), locators 126 may emit light in the visible band (e.g., about 380 nm to 750 nm), in the infrared (IR) band (e.g., about 750 nm to 1 mm), in the ultraviolet band (e.g., about 10 nm to about 380 nm), in another portion of the electromagnetic spectrum, or in any combination of portions of the electromagnetic spectrum.

External imaging device 150 may include one or more cameras, one or more video cameras, any other device capable of capturing images including one or more of locators 126, or any combination thereof. Additionally, external imaging device 150 may include one or more filters (e.g., to increase signal to noise ratio). External imaging device 150 may be configured to detect light emitted or reflected from locators 126 in a field of view of external imaging device 150. In embodiments where locators 126 include passive elements (e.g., retroreflectors), external imaging device 150 may include a light source that illuminates some or all of locators 126, which may retro-reflect the light to the light source in external imaging device 150. Slow calibration data may be communicated from external imaging device 150 to console 110, and external imaging device 150 may receive one or more calibration parameters from console 110 to adjust one or more imaging parameters (e.g., focal length, focus, frame rate, sensor temperature, shutter speed, aperture, etc.).

Position sensors 128 may generate one or more measurement signals in response to motion of near-eye display 120. Examples of position sensors 128 may include accelerometers, gyroscopes, magnetometers, other motion-detecting or error-correcting sensors, or any combination thereof. For example, in some embodiments, position sensors 128 may include multiple accelerometers to measure translational motion (e.g., forward/back, up/down, or left/right) and multiple gyroscopes to measure rotational motion (e.g., pitch, yaw, or roll). In some embodiments, various position sensors may be oriented orthogonally to each other.

IMU 132 may be an electronic device that generates fast calibration data based on measurement signals received from one or more of position sensors 128. Position sensors 128 may be located external to IMU 132, internal to IMU 132, or any combination thereof. Based on the one or more measurement signals from one or more position sensors 128, IMU 132 may generate fast calibration data indicating an estimated position of near-eye display 120 relative to an initial position of near-eye display 120. For example, IMU 132 may integrate measurement signals received from accelerometers over time to estimate a velocity vector and integrate the velocity vector over time to determine an estimated position of a reference point on near-eye display 120. Alternatively, IMU 132 may provide the sampled measurement signals to console 110, which may determine the fast calibration data. While the reference point may generally be defined as a point in space, in various embodiments, the reference point may also be defined as a point within near-eye display 120 (e.g., a center of IMU 132).

Eye-tracking unit 130 may include one or more eye-tracking systems. Eye tracking may refer to determining an eye's position, including orientation and location of the eye, relative to near-eye display 120. An eye-tracking system may include an imaging system to image one or more eyes and may optionally include a light emitter, which may generate light that is directed to an eye such that light reflected by the eye may be captured by the imaging system. For example, eye-tracking unit 130 may include a non-coherent or coherent light source (e.g., a laser diode) emitting light in the visible spectrum or infrared spectrum, and a camera capturing the light reflected by the user's eye. As another example, eye-tracking unit 130 may capture reflected radio waves emitted by a miniature radar unit. Eye-tracking unit 130 may use low-power light emitters that emit light at frequencies and intensities that would not injure the eye or cause physical discomfort. Eye-tracking unit 130 may be arranged to increase contrast in images of an eye captured by eye-tracking unit 130 while reducing the overall power consumed by eye-tracking unit 130 (e.g., reducing power consumed by a light emitter and an imaging system included in eye-tracking unit 130). For example, in some implementations, eye-tracking unit 130 may consume less than 100 milliwatts of power.

Near-eye display 120 may use the orientation of the eye to, e.g., determine an inter-pupillary distance (IPD) of the user, determine gaze direction, introduce depth cues (e.g., blur image outside of the user's main line of sight), collect heuristics on the user interaction in the VR media (e.g., time spent on any particular subject, object, or frame as a function of exposed stimuli), some other functions that are based in part on the orientation of at least one of the user's eyes, or any combination thereof. Because the orientation may be determined for both eyes of the user, eye-tracking unit 130 may be able to determine where the user is looking. For example, determining a direction of a user's gaze may include determining a point of convergence based on the determined orientations of the user's left and right eyes. A point of convergence may be the point where the two foveal axes of the user's eyes intersect. The direction of the user's gaze may be the direction of a line passing through the point of convergence and the mid-point between the pupils of the user's eyes.

Input/output interface 140 may be a device that allows a user to send action requests to console 110. An action request may be a request to perform a particular action. For example, an action request may be to start or to end an application or to perform a particular action within the application. Input/output interface 140 may include one or more input devices. Example input devices may include a keyboard, a mouse, a game controller, a glove, a button, a touch screen, or any other suitable device for receiving action requests and communicating the received action requests to console 110. An action request received by the input/output interface 140 may be communicated to console 110, which may perform an action corresponding to the requested action. In some embodiments, input/output interface 140 may provide haptic feedback to the user in accordance with instructions received from console 110. For example, input/output interface 140 may provide haptic feedback when an action request is received, or when console 110 has performed a requested action and communicates instructions to input/output interface 140. In some embodiments, external imaging device 150 may be used to track input/output interface 140, such as tracking the location or position of a controller (which may include, for example, an IR light source) or a hand of the user to determine the motion of the user. In some embodiments, near-eye display 120 may include one or more imaging devices to track input/output interface 140, such as tracking the location or position of a controller or a hand of the user to determine the motion of the user.

Console 110 may provide content to near-eye display 120 for presentation to the user in accordance with information received from one or more of external imaging device 150, near-eye display 120, and input/output interface 140. In the example shown in FIG. 1, console 110 may include an application store 112, a headset tracking module 114, an artificial reality engine 116, and an eye-tracking module 118. Some embodiments of console 110 may include different or additional modules than those described in conjunction with FIG. 1. Functions further described below may be distributed among components of console 110 in a different manner than is described here.

In some embodiments, console 110 may include a processor and a non-transitory computer-readable storage medium storing instructions executable by the processor. The processor may include multiple processing units executing instructions in parallel. The non-transitory computer-readable storage medium may be any memory, such as a hard disk drive, a removable memory, or a solid-state drive (e.g., flash memory or dynamic random-access memory (DRAM)). In various embodiments, the modules of console 110 described in conjunction with FIG. 1 may be encoded as instructions in the non-transitory computer-readable storage medium that, when executed by the processor, cause the processor to perform the functions further described below.

Application store 112 may store one or more applications for execution by console 110. An application may include a group of instructions that, when executed by a processor, generates content for presentation to the user. Content generated by an application may be in response to inputs received from the user via movement of the user's eyes or inputs received from the input/output interface 140. Examples of the applications may include gaming applications, conferencing applications, video playback application, or other suitable applications.

Headset tracking module 114 may track movements of near-eye display 120 using slow calibration information from external imaging device 150. For example, headset tracking module 114 may determine positions of a reference point of near-eye display 120 using observed locators from the slow calibration information and a model of near-eye display 120. Headset tracking module 114 may also determine positions of a reference point of near-eye display 120 using position information from the fast calibration information. Additionally, in some embodiments, headset tracking module 114 may use portions of the fast calibration information, the slow calibration information, or any combination thereof, to predict a future location of near-eye display 120. Headset tracking module 114 may provide the estimated or predicted future position of near-eye display 120 to artificial reality engine 116.

Artificial reality engine 116 may execute applications within artificial reality system environment 100 and receive position information of near-eye display 120, acceleration information of near-eye display 120, velocity information of near-eye display 120, predicted future positions of near-eye display 120, or any combination thereof from headset tracking module 114. Artificial reality engine 116 may also receive estimated eye position and orientation information from eye-tracking module 118. Based on the received information, artificial reality engine 116 may determine content to provide to near-eye display 120 for presentation to the user. For example, if the received information indicates that the user has looked to the left, artificial reality engine 116 may generate content for near-eye display 120 that mirrors the user's eye movement in a virtual environment. Additionally, artificial reality engine 116 may perform an action within an application executing on console 110 in response to an action request received from input/output interface 140, and provide feedback to the user indicating that the action has been performed. The feedback may be visual or audible feedback via near-eye display 120 or haptic feedback via input/output interface 140.

Eye-tracking module 118 may receive eye-tracking data from eye-tracking unit 130 and determine the position of the user's eye based on the eye tracking data. The position of the eye may include an eye's orientation, location, or both relative to near-eye display 120 or any element thereof. Because the eye's axes of rotation change as a function of the eye's location in its socket, determining the eye's location in its socket may allow eye-tracking module 118 to determine the eye's orientation more accurately.

In some embodiments, eye-tracking module 118 may store a mapping between images captured by eye-tracking unit 130 and eye positions to determine a reference eye position from an image captured by eye-tracking unit 130. Alternatively or additionally, eye-tracking module 118 may determine an updated eye position relative to a reference eye position by comparing an image from which the reference eye position is determined to an image from which the updated eye position is to be determined. Eye-tracking module 118 may determine eye position using measurements from different imaging devices or other sensors. For example, eye-tracking module 118 may use measurements from a slow eye-tracking system to determine a reference eye position, and then determine updated positions relative to the reference eye position from a fast eye-tracking system until a next reference eye position is determined based on measurements from the slow eye-tracking system.

Eye-tracking module 118 may also determine eye calibration parameters to improve precision and accuracy of eye tracking. Eye calibration parameters may include parameters that may change whenever a user dons or adjusts near-eye display 120. Example eye calibration parameters may include an estimated distance between a component of eye-tracking unit 130 and one or more parts of the eye, such as the eye's center, pupil, cornea boundary, or a point on the surface of the eye. Other example eye calibration parameters may be specific to a user and may include an estimated average eye radius, an average corneal radius, an average sclera radius, a map of features on the eye surface, and an estimated eye surface contour. In embodiments where light from the outside of near-eye display 120 may reach the eye (as in some augmented reality applications), the calibration parameters may include correction factors for intensity and color balance due to variations in light from the outside of near-eye display 120. Eye-tracking module 118 may use eye calibration parameters to determine whether the measurements captured by eye-tracking unit 130 would allow eye-tracking module 118 to determine an accurate eye position (also referred to herein as "valid measurements"). Invalid measurements, from which eye-tracking module 118 may not be able to determine an accurate eye position, may be caused by the user blinking, adjusting the headset, or removing the headset, and/or may be caused by near-eye display 120 experiencing greater than a threshold change in illumination due to external light. In some embodiments, at least some of the functions of eye-tracking module 118 may be performed by eye-tracking unit 130.

**FIG. 2A** is a diagram of an example of an HMD 200, in accordance with certain embodiments. HMD 200 may be part of an artificial reality system. In embodiments HMD 200 is used in an AR system and/or an MR system, portions of a front side 202 of HMD 200 may be at least partially transparent in the visible band (e.g., from about 380 nm to about 700 nm), and portions of HMD 200 that are between the front side 202 of HMD 200 and an eye of the user may be at least partially transparent (e.g., a partially transparent electronic or optical waveguide display). HMD 200 may include a front rigid body 205, a band 210, and a reference point 215.

Front rigid body 205 may include one or more electronic display elements (not shown in FIG. 2A), one or more integrated eye tracking systems (not shown in FIG. 2A), an Inertial Measurement Unit (IMU) 220, one or more position sensors 225, and reference point 215. In the example shown by FIG. 2A, position sensors 225 are located within IMU 220, and neither IMU 220 nor position sensors 225 are visible to a user of HMD 200. IMU 220 may be an electronic device that generates IMU data based on measurement signals received from one or more of position sensors 225. Each position sensor 225 may generate one or more measurement signals in response to motion of HMD 200. Examples of position sensors 225 include: one or more accelerometers, one or more gyroscopes, one or more magnetometers, another suitable type of sensor that detects motion, a type of sensor used for error correction of IMU 220, or some combinations thereof. In various embodiments, position sensors 225 may be located external to IMU 220, internal to IMU 220, or some combination thereof.

HMD 200 may also include a distributed network of sensor devices 230 (e.g., cameras), which may be embedded into the front rigid body 205. Note that, although not shown in FIG. 2A, in some embodiments, at least one sensor device 230 may be embedded into band 210. Each sensor device 230 may be implemented as a camera of a relatively small size. The distributed network of sensor devices 230 may replace a plurality of large conventional cameras. In some examples, each sensor device 230 of the distributed network embedded in HMD 200 may be implemented as a tiny chip camera with a limited predefined resolution. For example, some sensor devices 230 may each include an array of 100 × 100 pixels or an array of 200 × 200 pixels. In some examples, each sensor device 230 in the distributed network may have a field-of-view that does not overlap with or only partially overlap with a field-of-view of any other sensor device 230 integrated into HMD 200. HMD 200 may also include an imaging aperture associated with each sensor device 230 (not shown in FIG. 2A). Sensor device 230 may capture light from the surrounding area through the imaging aperture. Sensor devices 230 may, in combination, cover a much larger field-of-view (e.g., 360 degrees) than typically deployed by large conventional cameras (e.g., 280 degrees). The wider field-of-view obtained by sensor devices 230 may provide increased robustness.

In some embodiments, it may be impractical for each sensor device 230 in the distributed network of sensor devices 230 to have its own direct link (e.g., bus) to a central processing unit (CPU) or a controller 235 embedded into HMD 200. Instead, some sensor devices 230 may be coupled to controller 235 via a shared bus (not shown in FIG. 2A) in a scalable manner, thus providing a scalable network of sensor devices 230 embedded into HMD 200. In some embodiments, not all sensor devices 230 embedded into HMD 200 are active (i.e., turned on) at the same time. For example, controller 235 may be configured to dynamically activate a first subset of sensor devices 230 and deactivate a second subset of sensor devices 230 based on the specific situations, such as the particular applications running on HMD 200. For example, after locating a preferred part of an environment for scanning, some sensor devices 230 can remain active, whereas other sensor devices 230 may be deactivated to save power.

A sensor device 230 or a group of sensor devices 230 may be used to, for example, track one or more moving objects and specific features related to the one or more moving objects during a time period. The features related to the moving objects obtained during the time period may be then passed to another sensor device 230 or another group of sensor devices 230 for continuous tracking during a following time period, for example, based on instructions from controller 235. In one example, HMD 200 may use the extracted features in the scene as a "land marker" for user localization and head pose tracking in a three-dimensional world. A feature associated with a user's head may be extracted using one sensor device 230 at a time instant. In a next time instant, the user's head may move and another sensor device 230 may be activated to locate the same feature for performing head tracking. In some embodiments, controller 235 may be configured to predict which new sensor device 230 could potentially capture the same feature of a moving object (e.g., the user's head). For example, controller 235 may utilize the IMU data obtained by IMU 220 to perform coarse prediction. In this scenario, information about the tracked feature may be passed from one sensor device 230 to another sensor device 230, for example, based on the coarse prediction. A number of active sensor devices 230 may be dynamically adjusted (e.g., based on instructions from controller 235) in accordance with a specific task performed at a particular time instant. Furthermore, one sensor device 230 can be used to perform an extraction of a particular feature of an environment and provide extracted feature data to controller 235 for further processing and/or passing to another sensor device 230. Thus, each sensor device 230 in the distributed network of sensor devices 230 may process a limited amount of data.

In some examples, each sensor device 230 integrated into HMD 200 may be configured for a specific type of processing. For example, at least one sensor device 230 can be customized for tracking various features of an environment, such as determining sharp corners, hand tracking, and the like. A sensor device 230 may be customized to detect one or more particular features, while ignoring other features. In some examples, each sensor device 230 can perform early processing that provides information about a particular feature, e.g., coordinates of a feature and feature description. To support the early processing, certain processing circuitry may be incorporated into a sensor device 230, and sensor device 230 may pass data obtained based upon the early processing, thus reducing the amount of data being communicated between sensor device 230 and controller 235. In this way, a frame rate of sensor device 230 can increase while preserving a bandwidth requirement between sensor device 230 and controller 235. Furthermore, power dissipation and processing latency of controller 235 can be reduced as partial processing is performed at sensor device 230, and computational burden of controller 235 is reduced and distributed to one or more sensor devices 230. Another advantage of the partial and early processing performed at the sensor device 230 includes reduction in memory requirement for storage of image frames on an internal memory of controller 235 (not shown in FIG. 2A). Additionally, power consumption at controller 235 may be reduced as less memory access leads to a lower power dissipation. In some embodiments, processing circuitry of a sensor device 230 may be customized to operate as a neural network trained to track, for example, a user's hand, arm, face (e.g., mouth and facial movements), or other body parts.

Each sensor device 230 integrated into HMD 200 may need to provide a level of signal-to-noise ratio (SNR) above a threshold level defined for the sensor device 230. Because each sensor device 230 may be customized for a particular task, sensitivity of the customized sensor device 230 can be improved in comparison with general-purpose cameras. The distributed network of sensor devices 230 is a redundant system and it is possible to select (e.g., by controller 235) a sensor device 230 that can produce a preferred level of SNR. In this manner, tracking accuracy and robustness of the distributed network of sensor devices 230 can be greatly improved. Each sensor device 230 may be configured to operate in a wavelength range, such as in the infrared and/or visible spectrum.

In some embodiments, a sensor device 230 may include an array of photodiodes or other photodetectors fabricated on a silicon substrate (e.g., in a CMOS image sensor) or another semiconductor substrate to provide the desired working wavelength range and sensitivity. In one example, the photodetectors of a sensor device 230 may be based on an organic photonic film (OPF) photodetector material suitable for capturing light having wavelengths larger than 2000 nm. In another example, the photodetectors of a sensor device 230 may be based on Quantum Dot (QD) photodetector material. A QD-based sensor device 230 may be suitable for AR systems and applications used in low visibility environments (e.g., at night), where available ambient light may mostly be located in the non-visible wavelength range. Photodetectors implemented based on a QD film may be able to detect both visible and short-wave infrared light.

In some examples, controller 235 embedded into front rigid body 205 and coupled to sensor devices 230 of the distributed sensor network may be configured to combine captured information from sensor devices 230. Controller 235 may be configured to properly integrate data associated with different features collected by different sensor devices 230. For example, controller 235 may determine depth information for one or more objects in a local area surrounding some portions or all of HMD 200, based on the data captured by one or more of sensor devices 230.

**FIG. 2B** is a cross section 250 of front rigid body 205 of HMD 200 shown in FIG. 2A, in accordance with one or more examples. Front rigid body 205 may include sensor devices 230, controller 235 electrically coupled to sensor devices 230, an electronic or optical waveguide-based display 255, and an optical assembly 260. Display 255 and optical assembly 260 may together provide image light to an eyebox 265. For purposes of illustration, FIG. 2B only shows the cross section of front rigid body 205 associated with a single eye 270. Another display 255 and another optical assembly 260 may be used to provide image light to another eye of the user.

Display 255 may emit image light toward optical assembly 260. In some embodiments, display 255 may include a single electronic display or multiple electronic displays (e.g., a display for each eye of a user). Examples of the electronic display include: a liquid crystal display (LCD), an organic light emitting diode (OLED) display, an inorganic light emitting diode (ILED) display, an active-matrix organic light-emitting diode (AMOLED) display, a transparent organic light emitting diode (TOLED) display, a micro-LED display, a projector, or a combination thereof. In some embodiments, display 255 may also include an aperture, a Fresnel lens, a convex lens, a concave lens, a diffractive element, a waveguide, a filter, a polarizer, a diffuser, a fiber taper, a reflective surface, a polarizing reflective surface, or any other suitable optical elements that may affect the image light emitted from display 255. In some examples, display 255 may have one or more coatings, such as anti-reflective coatings. In some examples, display 255 may include an optical waveguide display that includes a transparent waveguide and input/output couplers (e.g., grating couplers) on the transparent waveguide to deliver image light from a projector to eyebox 265.

Optical assembly 260 may be similar to display optics 124 described above and may receive image light from display 255 and direct the image light to eyebox 265. In some embodiments, optical assembly 260 may magnify the received image light, correct optical aberrations associated with the image light, and project the corrected image light to eyebox 265 where user's eye 270 may be located. In some examples, optical assembly 260 may include a collimation element (lens) for collimating beams of image light emitted from display 255. Optical assembly 260 may include, for example, an aperture, a Fresnel lens, a refractive lens, a reflective surface, a diffractive element, a waveguide, a filter, or any other suitable optical elements that may affect image light emitted from display 255. Moreover, optical assembly 260 may include a combination of different optical elements. In some examples, one or more of the optical elements in optical assembly 260 may have one or more coatings, such as anti-reflective coatings and dichroic coatings. Magnification of the image light by optical assembly 260 may allow elements of display 255 to be physically smaller, weigh less, and consume less power than larger displays.

In some examples, front rigid body 205 may include an eye tracking system (e.g., eye-tracking unit 130, not shown in FIG. 2B) that determines eye tracking information for the user's eye 270. The determined eye tracking information may include information regarding a position (including orientation) of the user's eye 270 in eyebox 265, such as information about an angle of an eye-gaze. In one embodiment, the eye tracking system may illuminate the user's eye 270 with a structured light pattern. The eye tracking system may determine the position of the user's eye 270 based on deformations of the structured light pattern reflected from a surface of the user's eye and captured by a camera of the eye tracking system. In another embodiment, the eye tracking system may determine the position of the user's eye 270 based on magnitudes of image light captured over a plurality of time instants. In some examples, front rigid body 205 may include a varifocal module (not shown in FIG. 2B). The varifocal module may adjust the focus of one or more images displayed on display 255, based on, for example, the eye tracking information obtained from the eye tracking system. In one embodiment, the varifocal module may adjust the focus of the displayed images and mitigate vergence-accommodation conflict by adjusting a focal distance of optical assembly 260 based on the determined eye tracking information. In some embodiments, the varifocal module may adjust the focus of the displayed images by performing foveated rendering of the images based on the determined eye tracking information.

**FIG. 3** is a perspective view of an example of a near-eye display 300 in the form of a pair of glasses for implementing some of the examples disclosed herein. Near-eye display 300 may be a specific implementation of near-eye display 120 of FIG. 1, and may be configured to operate as a virtual reality display, an augmented reality display, and/or a mixed reality display. Near-eye display 300 may include a frame 305 and a display 310. Display 310 may be configured to present content to a user. In some embodiments, display 310 may include display electronics and/or display optics. For example, as described above with respect to near-eye display 120 of FIG. 1, display 310 may include an LCD display panel, an LED display panel, a micro-LED display panel, or an optical display panel (e.g., a waveguide display assembly).

Near-eye display 300 may further include various sensors 350a, 350b, 350c, 350d, and 350e on or within frame 305. In some embodiments, sensors 350a-350e may include one or more depth sensors, motion sensors, position sensors, inertial sensors, or ambient light sensors. In some embodiments, sensors 350a-350e may include one or more image sensors configured to generate image data representing different fields of views in different directions. In some embodiments, sensors 350a-350e may be used as input devices to control or influence the displayed content of near-eye display 300, and/or to provide an interactive VR/AR/MR experience to a user of near-eye display 300. In some embodiments, sensors 350a-350e may also be used for stereoscopic imaging.

In some embodiments, near-eye display 300 may further include one or more illuminators 330 to project light into the physical environment. The projected light may be associated with different frequency bands (e.g., visible light, infra-red light, ultra-violet light, etc.), and may serve various purposes. For example, illuminator(s) 330 may project light in a dark environment (or in an environment with low intensity of infra-red light, ultra-violet light, etc.) to assist sensors 350a-350e in capturing images of different objects within the dark environment. In some embodiments, illuminator(s) 330 may be used to project certain light patterns onto the objects within the environment. In some embodiments, illuminator(s) 330 may be used as locators, such as locators 126 described above with respect to FIG. 1.

In some embodiments, near-eye display 300 may also include a high-resolution camera 340. Camera 340 may capture images of the physical environment in the field of view. The captured images may be processed, for example, by a virtual reality engine (e.g., artificial reality engine 116 of FIG. 1) to add virtual objects to the captured images or modify physical objects in the captured images, and the processed images may be displayed to the user by display 310 for AR or MR applications.

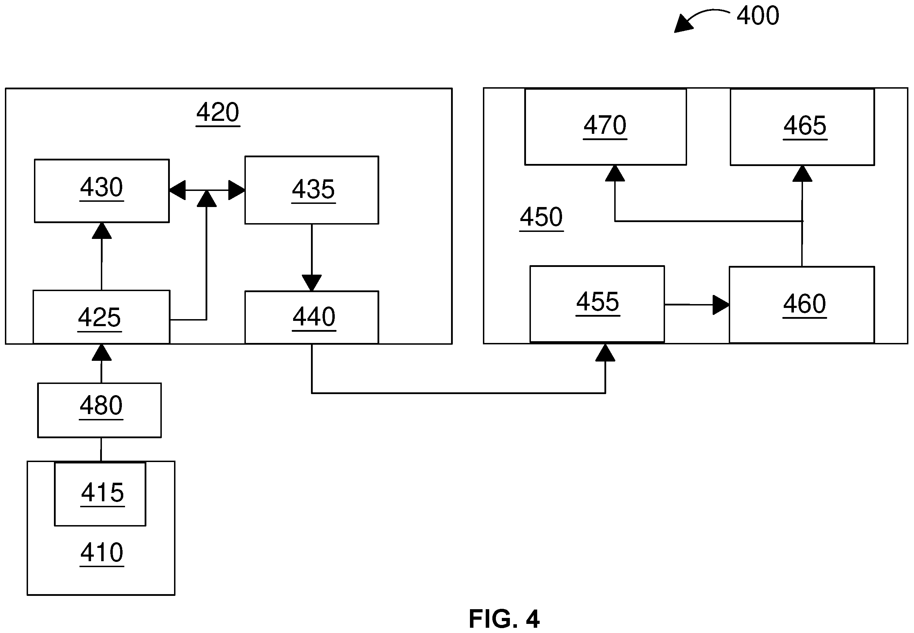

**FIG. 4** is a simplified block diagram of an example of a near-eye display 400 according to certain embodiments. Near-eye display 400 may be an example of the near-eye display systems described above. In the illustrated example, near-eye display 400 may include an application processor 420 and a display driver integrated circuit (DDIC) 450. Application processor 420 may include one or more processors, such as one or more CPUS and/or GPUs. Application processor 420 may receive data from one or more sensors 410 through a sensor interface 415. Sensors 410 may be examples of sensor devices described herein, and may be used to track the movement of the user's head, eyes, other body parts, or a controller as described above, and/or to capture an object or a scene of the surrounding environment. Sensor interface 415 of one or more sensors 410 may transmit head-tracking data, eye-tracking data, other tracking data, and/or images of the environment to a sensor interface 425 of application processor 420. In some embodiments, image filters 480 may be used to process image data captured by sensors 410, such as converting data format or image format, pre-processing the image data, or splitting or combining the image data.

Sensor interface 425 of application processor 420 may send the tracking data and/or images of the environment to an application 430 (e.g., an AR/VR game), which may simulate and render the images to be displayed to the user's left eye and right eye, for example, based on the tracking data and/or images of the environment. Application 430 may send the rendered images to a compositor 435. Compositor 435 may make predictions of the movement of the user's head or eye (or may receive the latest tracking data through sensor interface 425) to determine a new position of the user's head or eye. Compositor 435 may perform re-projection, such as distortion correction and time-warping, on the rendered images based on the predicted (or recaptured) new position of the head or eye of the user to generate final rendered image data. The final rendered image data may then be sent to a display interface 455 of DDIC 450 through a display interface 440 on application processor 420.

Display interface 455 of DDIC 450 may save the received image data in a frame buffer (not shown) or directly send the image data to a timing controller 460. Timing controller 460 may use the image data to provide instructions to a display gate driver 465 and a display source driver 470, which may drive light sources in the display to emit light. For example, display gate driver 465 may be used to provide scan control signals to scan lines through a scan control bus. Display source driver 470 may send display data to active pixels (e.g., light sources such as LEDs or micro-LEDs) through data lines. In some embodiments, display source driver 470 and/or display gate driver 465 may perform gamma correction (e.g., apply display gamma to correct or offset image gamma) and provide drive currents or voltages to the light sources based on a transfer function between input display values (e.g., gray levels or drive levels) and luminance levels.

As described above, sensors 410 may include infrared sensor devices for tracking user's body parts. In some embodiments, it may be desirable that sensors 410 can also capture color images of the surrounding environment for use as see-through images, in order to provide AR/MR user experience. Thus, in some AR/VR display system, sensors 410 may include one or more red-green-blue (RGB) image sensors that each include a color filter array (CFA) having an alternating mosaic pattern for capturing color and brightness information of the surrounding environment. A widely used mosaic pattern for CFAs of RGB image sensors is the Bayer pattern, which is generally accepted as the industry standard for one-shot color image.

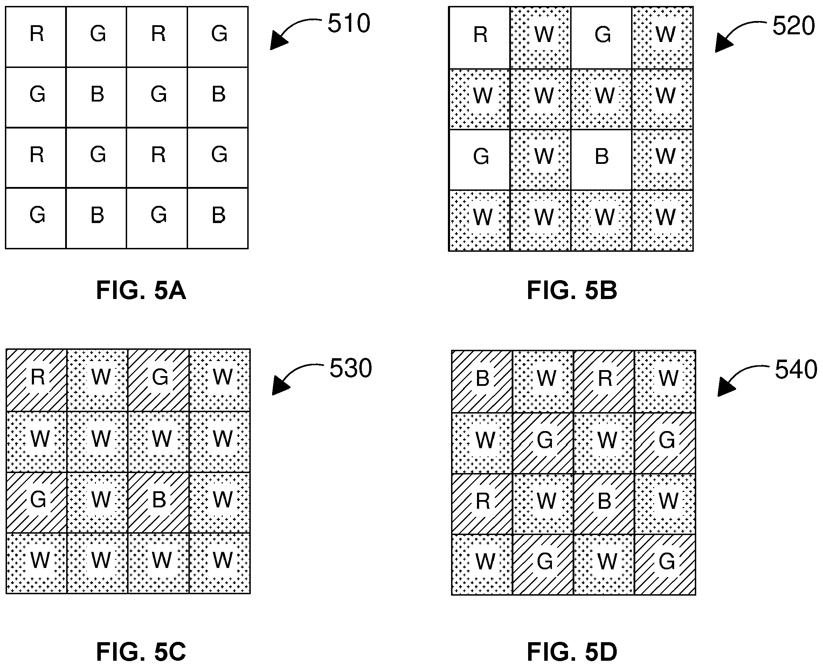

**FIG. 5A** illustrates an example of a pattern 510 of a Bayer CFA for a color image sensor that includes a two-dimensional array of photodiodes. In the illustrated example, the Bayer CFA includes a red, green, or blue color filter on a photodiode in each pixel, and thus the color image sensor may only sense light of one color at each pixel location. About 25% of the pixels may each include a red color filter and thus may only sense red light. About 25% of the pixels may each include a blue color filter and thus may only sense blue light. About 50% of the pixels may each include a green color filter and thus may only sense green light. Thus, the green pixels may provide about 50% of the scene information, and may be used as the luminance channel and may provide spatial information of the scene. To generate a full color image, RGB image channels including image data for three colors at each pixel location may be needed. Techniques such as interpolation-based de-mosaicing techniques may be used to reconstruct the RGB image channels of a color image from image data having the mosaic pattern generated by the color image sensor with the Bayer CFA.

The CFA on top of the photodiodes may absorb and/or reflect some portions of the incoming light. As such, a Bayer color image sensor may capture only a fraction (e.g., about one-third) of the incoming light. Therefore, the Bayer color image sensor may exhibit a low efficiency of converting an incoming light pattern into electrical image data. As a result, a Bayer color image sensor may yield a low signal-to-noise ratio (SNR) and may not capture details of an object or a scene when used in low-light environments.

To overcome the low sensitivity of Bayer color image sensors, a sparse CFA may be used in a color image sensor (referred to as a sparse color image sensor) for obtaining full-color images (e.g., including 4 or more channels) from a single image sensor. In the sparse color image sensor with a sparse CFA, panchromatic (white) pixels with no color filters are used along with R/G/B color pixels, where the R/G/B color pixels may only constitute a fraction of all pixels of the color image sensor. The panchromatic pixels may capture light in a wide wavelength range (e.g., visible and infrared) and may provide a better efficiency and sensitivity than RGB pixels because no filters are used in the panchromatic pixels and thus no light is blocked by filters. Therefore, the image data captured by a sparse color image sensor may include data in red, green, blue, and white (intensity) channels.

The sparse color image sensor may function in a manner similar to human eyes. In a human retina, 95% of the photoreceptors are rod cells and only 5% are cone cells. The rod cells may primarily be responsible for capturing luminance information under low-light conditions, while the cone cells may be responsible for color vision and color sensitivity and may function best in relatively bright conditions. To achieve human-like vision performance, in particularly, in low-light conditions, a sparse color image sensor may have a high percentage of white pixels, and color pixels may be sparsely distributed on the image sensor. By adding panchromatic pixels to the red, green, and blue color pixels used in Bayer color image sensors, the sparse color image sensors can achieve a significant increase in light sensitivity, while retaining overall image quality and color fidelity, and thus may allow users to capture better pictures and video under low-light conditions and/or use faster shutter speeds to reduce motion blur when imaging moving objects. In some embodiments, the image data captured by the sparse color image sensor may also include information in the infrared band (e.g., in near IR band between about 650 nm and about 850 nm or higher), which may be captured by the panchromatic pixels in addition to light in the visible band, or may be captured by pixels with IR filters.

**FIG. 5B** illustrates an example of a sparse CFA 520 of a sparse color image sensor according to certain embodiments. Sparse CFA 520 may include color filers on about one quarter of the pixels, where red filters may be on about 1/16 of the pixels, blue filters may be on about 1/16 of the pixels, and green filters may be on about 1/8 of the pixels. Other pixels may be panchromatic pixels that have no color filters, and thus may capture both visible light and infrared light.

**FIG. 5C** illustrates an example of a sparse CFA 530 of a sparse color image sensor according to certain embodiments. Sparse CFA 530 may include color filers on about ¼one quarter of the pixels, where red filters may be on about 1/16 of the pixels, blue filters may be on about 1/16 of the pixels, and green filters may be on about 1/8 of the pixels. Other pixels may be panchromatic pixels that have no color filters, and may capture both visible light and infrared light. Some color pixels or panchromatic pixels may include an IR filter and thus may capture IR light. Pixel interpolation may be performed to construct color images and IR images.

**FIG. 5D** illustrates an example of a sparse CFA 540 of a sparse color image sensor according to certain embodiments. Sparse CFA 540 may include color filers on about a half of the pixels, where red filters may be on about 1/8 of the pixels, blue filters may be on about 1/8 of the pixels, and green filters may be on about 1/4 of the pixels. Other pixels may be panchromatic pixels that have no color filters, and may capture both visible light and infrared light. Some color pixels or panchromatic pixels may include an IR filter and thus may capture IR light. Pixel interpolation may be performed to construct color images and IR images.

Many application processors, such as many general purpose processors, may not be able to process the output data of the sparse color image sensor in the raw color pattern shown in, for example, FIGS. 5B-5D. According to certain embodiments, a hardware accelerator including one or more image filter circuits, such as a sparse-to-monochrome filter and a re-mosaic filter, may be implemented in the image sensor die, an image/application processor (e.g., in a system-on-chip (SOC)), or an intermediary image conversion chip (e.g., an intermediate processor, an intermediate image signal processor (ISP), an FPGA, or an ASIC) to convert the captured data into images in formats that can be directly processed by the image processor. For example, in the example shown in FIG. 4, image filters 480 may include a sparse-to-monochromatic filter for converting the image data captured by the sparse color image sensor in a single shot into a monochromatic image (e.g., a black-and-white or gray-scale image), and may include a re-mosaic filter for converting the image data captured by the sparse color image sensor in the single shot into a Bayer RGB color image (e.g., including RGGB patterns). In some embodiments, image filters 480 may also include a de-mosaic filter for converting the Bayer RGB color image into monochromatic images for red, green, and blue channels of a full-color image. Image filters 480 may be implemented on sensors 410, application processor 420, or another device, such as a stand-alone FPGA or ASIC chip.

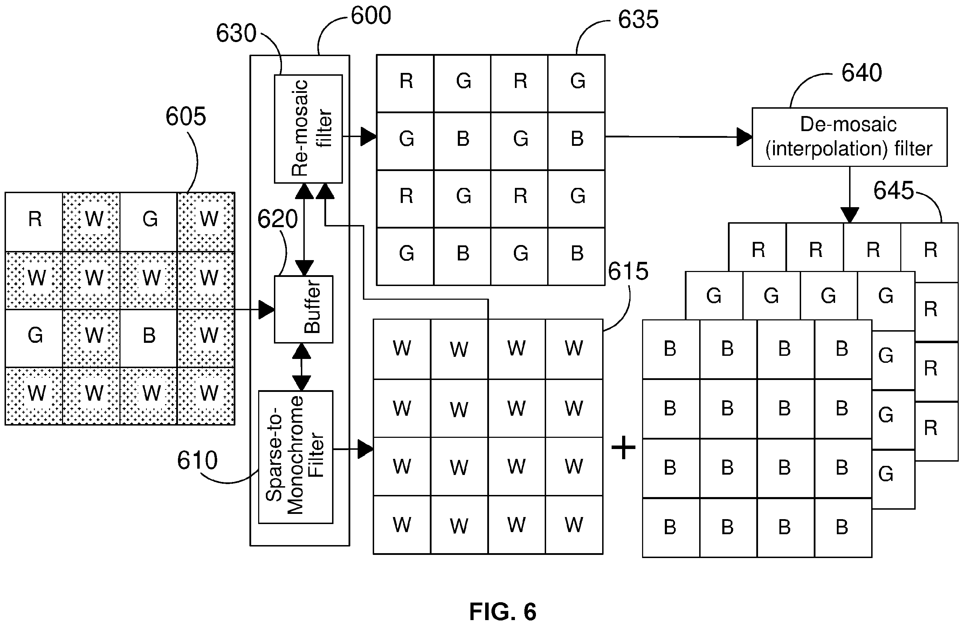

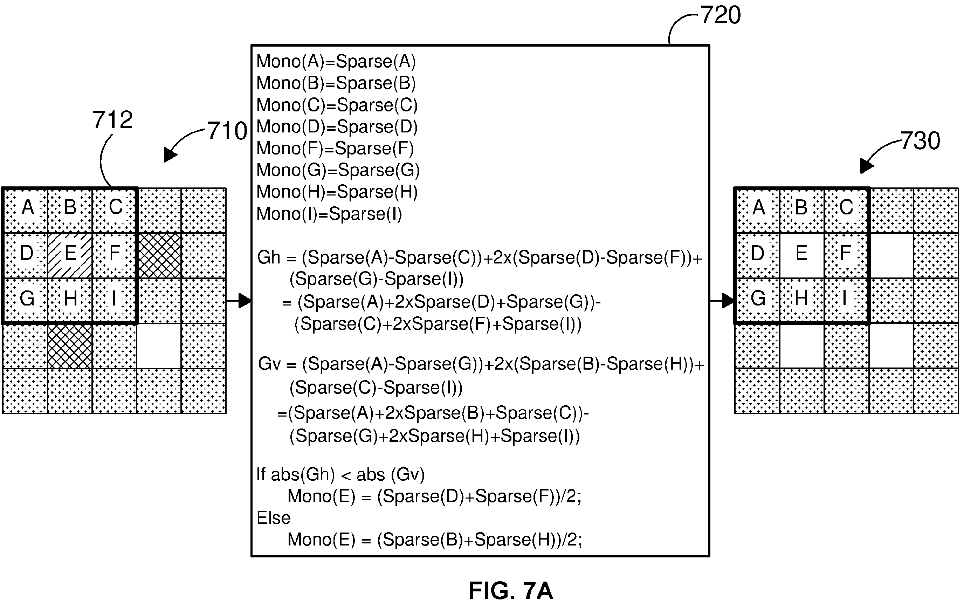

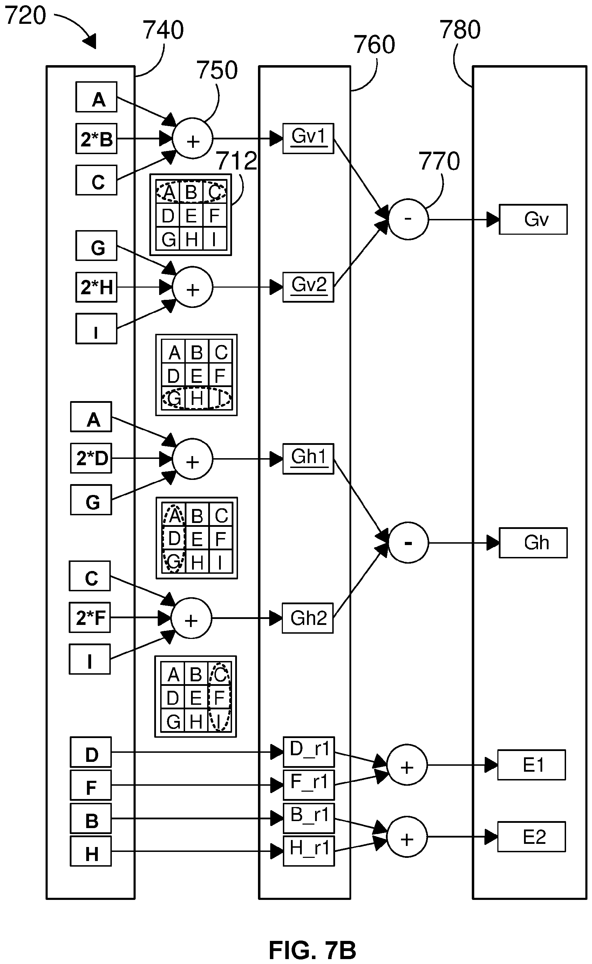

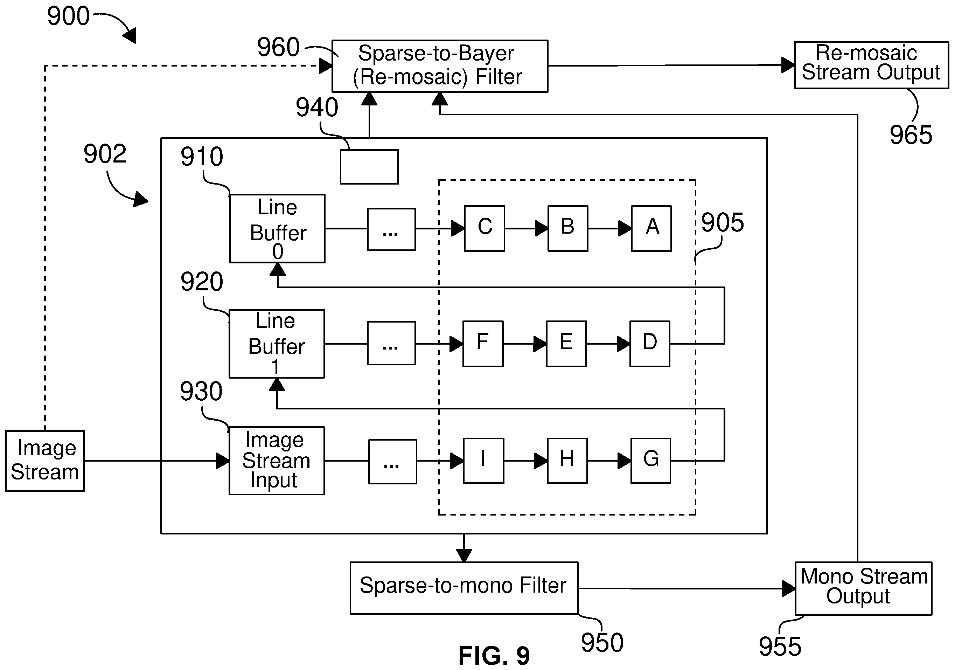

**FIG. 6** illustrates an example of converting a sparse color image captured by a sparse color image sensor into images in red, green, blue, and panchromatic (white) channels according to certain embodiments. In the illustrated example, a sparse color image 605 may be output by a sparse color image sensor that includes a sparse CFA 520 shown in FIG. 5B. A hardware accelerator 600 may include a sparse-to-monochromatic filter 610, a re-mosaic filter 630, and a buffer 620 shared by sparse-to-monochromatic filter 610 and re-mosaic filter 630. Buffer 620 may be used to temporarily store input data of sparse color image 605, which may be sent to buffer 620 in a data stream. Sparse-to-monochromatic filter 610 may generate a monochromatic image 615 (e.g., a black-and-white image) from sparse color image 605 as described in more details below, for example, with respect to FIGS. 7-9. Monochromatic image 615 output from sparse-to-monochromatic filter 610 may be saved to a memory (e.g., RAM). Re-mosaic filter 630 may generate a Bayer color image 635 using sparse color image 605 and monochromatic image 615 generated by sparse-to-monochromatic filter 610. More details of the operations of re-mosaic filter 630 are described below, for example, with respect to FIGS. 9-12D. Bayer color image 635 output from re-mosaic filter 630 may be saved to a memory (e.g., RAM).

In some embodiments, hardware accelerator 600 or another processing device (e.g., application processor 420) may include a de-mosaic filter 640, which may generate color images 645 for red, green, and blue channels of a full-color image. Color images 645 may be generated by, for example, interpolating color pixels in Bayer color image 635. Color images 645 and monochromatic image 615 may be the four channels of the full-color image and may be processed by one or more image processors and/or tracking units for image rendering in an artificial reality system.

**FIG. 7A** illustrates an example of converting a sparse color image 710 (e.g., captured by a sparse color image sensor disclosed herein) into a monochromatic (e.g., black-and-white) image according to certain embodiments. The illustrated example shows a 5 × 5 window of sparse color image 710 that may include a pattern shown in FIG. 5B or 5C. To convert sparse color image 710 into a monochromatic image 730, color pixels in sparse color image 710 may need to be converted to panchromatic pixels by a sparse-to-monochromatic filter 720. Pixel data
Sparse(X) of panchromatic pixels in sparse color image 710 may be used as the pixel data Mono(X) of corresponding pixels in monochromatic image 730.

In the illustrated example, sparse-to-monochromatic filter 720 may convert each color pixel (e.g., pixel E) using pixel data of panchromatic pixels in a 3×3 window 712 that has the color pixel at the center of the 3×3 window. For example, sparse-to-monochromatic filter 720 may determine the horizontal gradient *Gₕ* and the vertical gradient *Gᵥ* in window 712 using pixel data of the panchromatic pixels in window 712, and determine pixel data Mono(E) for pixel E in monochromatic image 730 based on the relative magnitudes of horizontal gradient *Gₕ* and vertical gradient *Gᵥ.* If horizontal gradient *Gₕ* is greater than vertical gradient *Gᵥ*, pixel data Mono(E) for pixel E in monochromatic image 730 may be determined based on panchromatic pixel data of pixels above and below pixel E in sparse color image 710 (or monochromatic image 730), such as an average of pixel data Sparse(B) (= Mono(B)) and Sparse(H) (= Mono(H)) of pixels B and H. If horizontal gradient *Gₕ* is less than vertical gradient *Gᵥ*, pixel data Mono(E) for pixel E in monochromatic image 730 may be determined based on pixel data of pixels to the left and right of pixel E in sparse color image 710 (or monochromatic image 730), such as an average of pixel data Sparse(D) (= Mono(D)) and Sparse(F) (= Mono(F)) of pixels D and F. In one example, horizontal gradient *Gₕ* and vertical gradient *Gᵥ* in a window 712 may be determined according to:

```
       Gh = (Sparse(A)-Sparse(C))+2×(Sparse(D)-Sparse(F))+(Sparse(G)-Sparse(I))
          = (Sparse(A)+2×Sparse(D)+Sparse(G))-
       (Sparse(C)+2×Sparse(F)+Sparse(I)), and
       Gv = (Sparse(A)-Sparse(G))+2×(Sparse(B)-Sparse(H))+(Sparse(C)-Sparse(I))
          = (Sparse(A)+2×Sparse(B)+Sparse(C))-
       (Sparse(G)+2 × Sparse(H)+Sparse(I)).
```

Each color pixel in sparse color image 710 may be converted to a panchromatic pixel in the manner described above.

**FIG. 7B** illustrates an example of an implementation of sparse-to-monochromatic filter 720. In the illustrated example, sparse-to-monochromatic filter 720 may include an input buffer 740 (which may be a part of sparse-to-monochromatic filter 720 or may be shared by sparse-to-monochromatic filter 720 and a re-mosaic filter), logic circuits 750 and 770, a first register 760, and a second register 780. Input buffer 740 may store pixel data of pixels in a window 712 of sparse color image 710. Logic circuit 750 may perform arithmetic operations on pixel data of pixels in window 712, and store computation results in first register 760. For example, logic circuit 750 may include a first arithmetic operation unit configured to determine a first value Gv1 = Sparse(A)+2×Sparse(B)+Sparse(C), a second arithmetic operation unit configured to determine a second value Gv2= Sparse(G)+2×Sparse(H)+Sparse(I), a third arithmetic operation unit configured to determine a third value Gh1= Sparse(A)+2×Sparse(D)+Sparse(G), and a fourth arithmetic operation unit configured to determine a fourth value Gh2=Sparse(C)+2× Sparse(F)+Sparse(I). First value Gv1, second value Gv2, third value Gh1, and fourth value Gh2 may be saved in first register 760. In some embodiments, pixel data D_r1, F_r1, B_r1 and H_r1 of pixels D, F, B, and H may also be stored in first register 760. Logic circuit 770 may perform further arithmetic operations on data values stored in first register 760. For example, logic circuit 770 may determine vertical gradient *Gᵥ*=Gv1-Gv2, horizontal gradient *Gₕ*=Gh1-Gh2, E1=Sparse(D)+Sparse(F), and E2=Sparse(B)+Sparse(H), and store the determined values to second register 780. Values stored in second register 780 may be used to determine pixel data Mono(E) for pixel E in monochromatic image 730 as either E1/2 or E2/2 based on whether *Gₕ* is greater than *Gᵥ*.

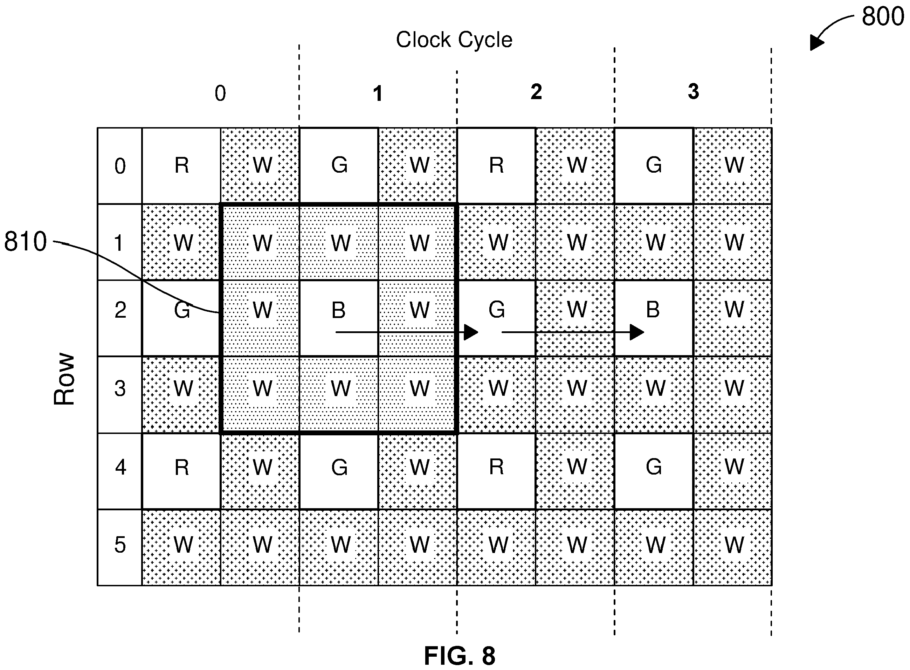

**FIG. 8** illustrates an example of converting color pixels in a sparse color image 800 into panchromatic (white) pixels according to certain embodiments. In the illustrated example, color pixels on every other row of sparse color image 800 may be converted one by one into panchromatic (white) pixels as the input image stream is received. Each color pixel may be converted into a panchromatic pixel in one clock cycle using pixel data of panchromatic pixels in a 3×3 windows 810 that has the color pixel at the center of the 3×3 window as described above with respect to FIG. 7A. The color pixels may be converted while the sparse-to-monochromatic filter (e.g., sparse-to-monochromatic filter 720) is receiving pixel data in an image stream. The clock frequency for the sparse-to-monochromatic filter may be a half of the data rate of the image stream for every other row of sparse color image 800. As shown in FIG. 8, to convert a color pixel to a panchromatic pixel, pixel data for the rows of pixels above and below the color pixel may be used. Therefore, the image stream for pixels in at least two rows of a color image may need to be buffered. For example, a color pixel in row 2 may be converted to a panchromatic pixel after at least some pixel data for row 3 is received, where pixel data for rows 1 and 2 may be buffered in two line buffers (e.g., implemented in RAM) of buffer 620.

**FIG. 9** illustrates an example of buffering pixel data for sparse-to-monochromatic image conversion and sparse-to-Bayer (re-mosaic) image conversion according to certain embodiments. In the illustrated example, a local buffer 902 of a hardware accelerator 900 including one or more image filters disclosed herein (e.g., hardware accelerator 600) may include a line buffer 0 (910) for storing pixel data of a first row of pixels in a sparse color image (e.g., sparse color image 710 or 810) and a line buffer 1 (920) for storing pixel data of a second row of pixels in the sparse color image. Pixel data for a third row of pixels may be input into an image stream input 930, which may be connected to an input buffer and/or logic circuits, such as combinational logic circuits and/or arithmetic operation circuits that implements a sparse-to-monochromatic filter 950 described above and a sparse-to-Bayer filter 960 (re-mosaic filter) described in detail below. Local buffer 902 may also include additional storage devices 940, such as RAM devices or registers, which may be used to store intermediate results (e.g., as shown in FIG. 7B) or previously received pixel data of the sparse color image that may need to be used by a filter but is not in line buffer 0 (910) and line buffer 1 (920) as described in more details below.

The logic circuits of sparse-to-monochromatic filter 950 may, after pixel data for pixels G, H, and I in a 3×3 window 905 is received, determine the panchromatic pixel data for a color pixel (e.g., pixel E) at the center of window 905, for example, using the method described above with respect to FIGS. 7A and 7B. The panchromatic pixel value for the color pixel may be stored in a monochromatic stream output buffer 955, and may also be used to generate a Bayer color image as described in the present disclosure. In each clock cycle of the sparse-to-monochromatic filter, pixel data in line buffer 0 may be right shifted such that the pixel data of the two right-most pixels (e.g., pixels A and B) in line buffer 0 may be shifted out of line buffer 0. Pixel data in line buffer 1 may also be right shifted such that pixel data of the two right-most pixels (e.g., pixels D and E) in line buffer 1 may be shifted into line buffer 0. The pixel data in image stream input 930 or the input buffer may also be right shifted such that pixel data of the two right-most pixels (e.g., pixels G and H) may be shifted into line buffer 1 and pixel data for the next two new pixels may be shifted into image stream input 930 or the input buffer. As pixel data for the next two new pixels in the third row of pixel is shifted into image stream input 930, the logic circuit may generate the panchromatic pixel data for the next color pixel and save the panchromatic pixel data in monochromatic stream output buffer 955. After all pixel data for the third row of pixels is received by image stream input 930, pixel data for the first and second rows of pixels may be shifted out of line buffer 0 and line buffer 1, pixel data for the third row of pixels may be shifted into line buffer 0, and pixel data for a fourth row of pixels and a fifth row of pixels may be shifted into line buffer 1 and image stream input 930 (or the input buffer), respectively, during which the logic circuit may generate panchromatic pixel data for color pixels in the fourth row and save the panchromatic pixel data in monochromatic stream output buffer 955. The above-described process may continue for the next two rows of the pixels until all rows of pixels of the sparse color image are processed by the logic circuit.

The logic circuits of sparse-to-Bayer filter 960 may use the pixel data of the sparse color image in local buffer 902 (e.g., line buffer 0 (910), line buffer 1 (920), and additional storage devices 940) and panchromatic pixel values (e.g., for color pixels of the sparse color image) that are generated by sparse-to-monochromatic filter 950 and stored in monochromatic stream output buffer 955 to generate a Bayer color image. For example, as described in detail below, the sparse-to-Bayer conversion for pixels in some rows of the sparse color image may need to be delayed for a longer time until all pixel data used for the conversion is received at the image stream input, and thus some pixel data used for the conversion but was received early may no longer be in the line buffers. Therefore, such data may need to be stored in additional storage devices 940. The Bayer color image data output by sparse-to-Bayer filter 960 may be stored in a re-mosaic stream output buffer 965.

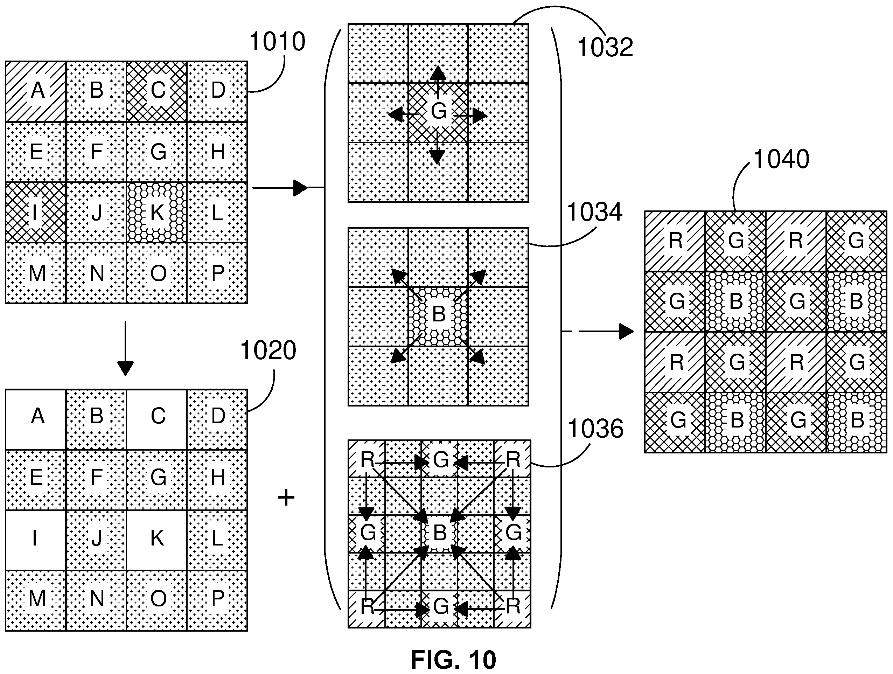

**FIG. 10** illustrates an example of converting a sparse color image 1010 captured by a sparse color image sensor into a Bayer color image 1040 according to certain embodiments. In the illustrated example, a monochromatic image 1020 may be generated from sparse color image 1010, where panchromatic pixel data for pixels A, C, I, and K may be generated by interpolating pixel data of panchromatic pixels, for example, using techniques described above with respect to FIGS. 7-9. To generate Bayer color image 1040, pixel data of a green pixel (e.g., pixel C or I) in sparse color image 1010 may be used, in combination with pixel data in monochromatic image 1020, to determine pixel data for pixels of Bayer color image 1040 to the left and right of the original location of the green pixel and pixel data for pixels of Bayer color image 1040 above and below the location of the original green pixel, as indicated by arrows in a diagram 1032. Pixel data of a blue pixel (e.g., pixel K) in sparse color image 1010 may be used, in combination with pixel data in monochromatic image 1020, to determine the pixel data of four pixels of Bayer color image 1040 adjacent to and in the diagonal directions of the original location of the blue pixel as indicated by arrows in a diagram 1034. Pixel data of red pixels (e.g., pixel A in each 4×4 tile) in sparse color image 1010 may be used, in combination with pixel data in monochromatic image 1020, to determine the pixel data of red pixels of Bayer color image 1040 at the original locations of the green pixels and the blue pixel as indicated by arrows in a diagram 1036.

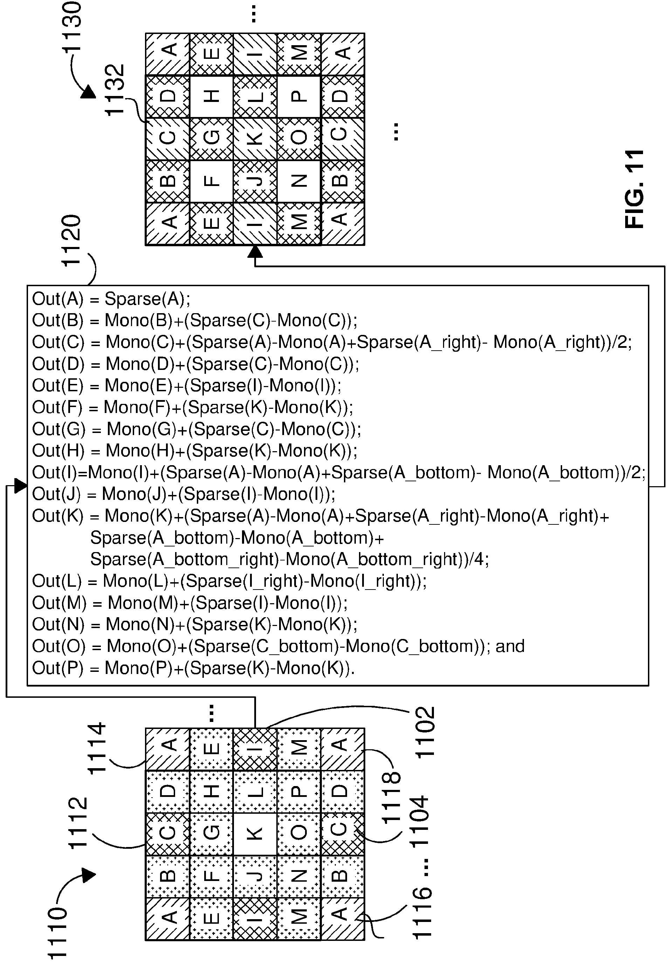

**FIG. 11** illustrates an example of converting a sparse color image 1110 into a Bayer color image 1130 using a re-mosaic filter 1120 according to certain embodiments. Sparse color image 1110 may include a two-dimensional array of tiles 1112, where each tile 1112 may include 4×4 pixels (e.g., pixels A-P). In each tile 1112, pixel A may be a red pixel, pixels C and I may be green pixels, pixel K may be a blue pixel, and other pixels may be panchromatic (white) pixels. Bayer color image 1130 may include a two-dimensional array of tiles 1132, where each tile 1132 may include 4×4 pixels (e.g., pixels A-P). In each tile 1132, pixels A, C, I, and K may be red pixels, pixels B, D, E, G, J, L, M, and O may be green pixels, and pixels F, H, N, and P may be blue pixels. Each tile 1132 may include four 2×2 blocks, where each 2×2 block may include a red pixel, two green pixels, and a blue pixel arranged in a pattern RGGB as shown in pattern 510 or Bayer color image 635, 1040, or 1130.

As described above with respect to FIG. 10, pixel data of Bayer color image 1130 may be determined using pixel data Mono(A) to Mono(P) of a monochromatic image (e.g., monochromatic image 730 or 1020) generated from sparse color image 1110 and pixel data Sparse(X) of color pixels in sparse color image 1110, where X is a color pixel (e.g., pixel A, C, I, or K) in sparse color image 1110. In one example, pixel data Out(A) to Out(P) of pixels A-P in each tile 1132 of Bayer color image 1130 may be determined according to:

```
       Out(A) = Sparse(A);
       Out(B) = Mono(B)+(Sparse(C)-Mono(C));
       Out(C) = Mono(C)+(Sparse(A)-Mono(A)+Sparse(A_right)- Mono(A_right))/2;
       Out(D) = Mono(D)+(Sparse(C)-Mono(C));
       Out(E) = Mono(E)+(Sparse(I)-Mono(I));
       Out(F) = Mono(F)+(Sparse(K)-Mono(K));
       Out(G) = Mono(G)+(Sparse(C)-Mono(C));
       Out(H) = Mono(H)+(Sparse(K)-Mono(K));
       Out(I)=Mono(I)+(Sparse(A)-Mono(A)+Sparse(A_bottom)-
       Mono(A_bottom))/2;
       Out(J) = Mono(J)+(Sparse(I)-Mono(I));
       Out(K) = Mono(K)+(Sparse(A)-Mono(A)+Sparse(A_right)-Mono(A_right)+
              Sparse(A_bottom)-Mono(A_bottom)+
              Sparse(A_bottom_right)-Mono(A_bottom_right))/4;
       Out(L) = Mono(L)+(Sparse(I_right)-Mono(I_right));
       Out(M) = Mono(M)+(Sparse(I)-Mono(I));
       Out(N) = Mono(N)+(Sparse(K)-Mono(K));
       Out(O) = Mono(O)+(Sparse(C_bottom)-Mono(C_bottom)); and
       Out(P) = Mono(P)+(Sparse(K)-Mono(K)).
```

In the equations above, pixel A right is pixel A (e.g., pixel 1114) in an adjacent tile to the right of current tile 1112, pixel A bottom is pixel A (e.g., pixel 1116) in an adjacent tile below current tile 1112, pixel A_bottom_right is pixel A (e.g., pixel 1118) in a tile below and to the right of current tile 1112, pixel I_right is pixel I (e.g., pixel 1102) in an adjacent tile to the right of current tile 1112, and pixel C bottom is pixel C (e.g., pixel 1104) in an adjacent tile below current tile 1112. In some embodiments, re-mosaic filter 1120 may include logic circuits (e.g., combinational logic circuits) configured to perform operations described in the above equations, using pixel data of pixels in a 5 × 5 window shown by sparse color image 1110 in FIG. 11.

As shown by FIGS. 7 and 11, the sparse-to-monochromatic filter and the re-mosaic filter may both use pixel data of panchromatic pixels in the sparse color image generated by a sparse color image sensor. Therefore, in some embodiments, the sparse-to-monochromatic filter and the re-mosaic filter may share some local buffers (e.g., line buffers implemented using RAM) that store pixel data of the sparse color image from an input image stream. Sharing the local buffers by different image filter circuits may reduce chip area for local memory and reduce power consumption. In some embodiments, pixel data of the monochromatic image generated by the sparse-to-monochromatic filter using the pixel data of the sparse color image may be buffered and used by the re-mosaic filter, such that re-mosaic filter may not need to recompute the monochromatic pixel data. In some embodiments, the output ordering may be arranged to more efficiently share the local buffers and reduce local memory requirements.

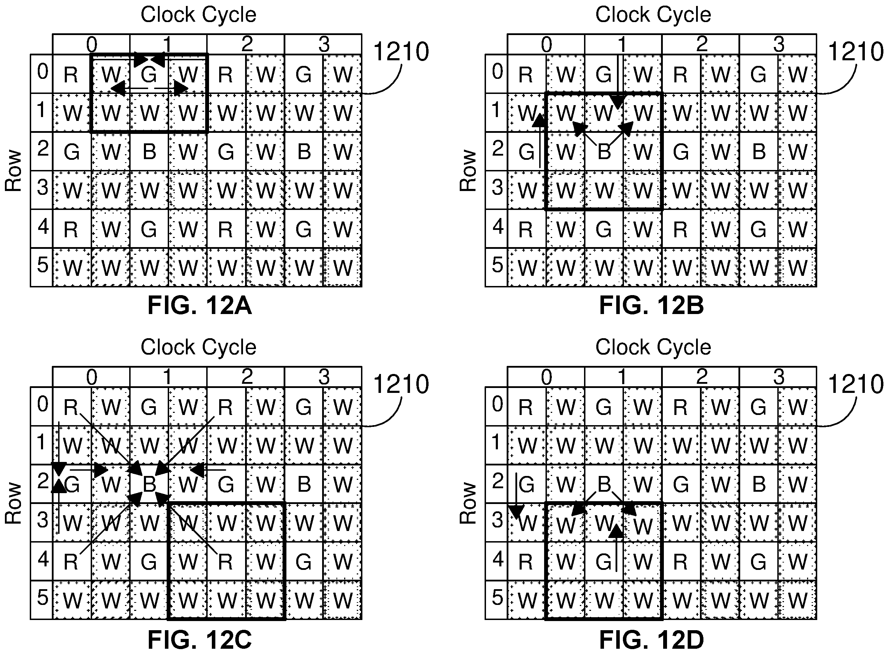

**FIGS. 12A-12D** illustrate an example of converting a sparse color image 1210 captured by a sparse color image sensor into a monochromatic image and a Bayer color image while sharing some local buffers according to certain embodiments. FIGS. 12A-12D only show an example of determining pixel data for pixels in a 4×4 tile of the Bayer color image and pixel data for pixels in a 4×4 tile of the monochromatic image. Pixel data for pixels in other tiles of the Bayer color image and the monochromatic image may be determined in similar manners.

**FIG. 12A** shows an example of generating the first row (row 0) of the monochromatic image and the first row (row 0) of the Bayer color image from sparse color image 1210. As described above with respect to FIGS. 7A and 7B, the sparse-to-monochromatic filter may use pixel data of panchromatic pixels in row 0 and row 1 of sparse color image 1210 to determine pixel data (e.g., Mono(A), Mono(C), and Mono(A right)) for pixels in the first row (row 0) of the monochromatic image and at locations that correspond to color pixels (e.g., red and green pixels) in sparse color image 1210. The monochromatic pixel data (e.g., Mono(A), Mono(C), and
Mono(A right)) for pixels in the first row of the monochromatic image may be stored in a buffer (e.g., monochromatic stream output buffer 955) for use by the re-mosaic filter.

FIG. 12A shows that the re-mosaic filter may use pixel data of the color pixels in row 0 of sparse color image 1210 and pixel data of pixels in row 0 of the monochromatic image to determine pixel data for pixels in row 0 of the Bayer color image. For example, as indicated by arrows in FIG. 12A and described above with respect to FIG. 11, the pixel data of the first pixel (e.g., red pixel) in row 0 of the Bayer color image may be the same as the pixel data (e.g., sparse(A)) of the first pixel (e.g., red pixel) in row 0 of sparse color image 1210. The pixel data of the second pixel (e.g., a green pixel) in row 0 of the Bayer color image may be determined based on pixel data (e.g., Sparse(C)) of the third pixel (e.g., a green pixel) in row 0 of sparse color image 1210, pixel data (e.g., Mono(C)) of the third pixel in row 0 of the monochromatic image, and the pixel data (e.g., Mono(B) = Sparse(B)) of the second pixel (e.g., a panchromatic pixel) in row 0 of sparse color image 1210. The pixel data of the third pixel (e.g., a red pixel) in row 0 of the Bayer color image may be determined based on pixel data (e.g., Sparse(A) and Sparse(A right)) of the first pixel and the fifth pixel (e.g., red pixels) in row 0 of sparse color image 1210, and the panchromatic pixel data (e.g., Mono(A), Mono(C), and Mono(A right)) of the first, third, and fifth pixels of the monochromatic image determined by the sparse-to-monochromatic filter using pixel data of panchromatic pixels in row 0 and row 1 of sparse color image 1210. The pixel data of the fourth pixel (e.g., a green pixel) in row 0 of the Bayer color image may be determined based on pixel data (e.g., Sparse(C)) of the third pixel (e.g., a green pixel) in row 0 of sparse color image 1210, pixel data (e.g., Mono(C)) of the third pixel in row 0 of the monochromatic image, and the pixel data (e.g., Mono(D)=Sparse(D)) of the fourth pixel (e.g., a panchromatic pixel) in row 0 of sparse color image 1210.

Pixel data for other pixels in row 0 of the Bayer color image may be generated in similar manners. Therefore, pixel data of pixels in row 0 of the Bayer color image may be determined using pixel data of pixels in row 0 of sparse color image 1210 and pixel data of pixels in row 0 of the monochromatic image, which may in turn be determined using pixel data of panchromatic pixels in row 0 and row 1 of sparse color image 1210. As such, pixel data of pixels in row 0 of the Bayer color image and pixel data of pixels in row 0 of the monochromatic image can be determined after pixel data of pixels in row 0 and row 1 of sparse color image 1210 is received by the image filters.

**FIG. 12B** shows an example of generating the second row (row 1) of the monochromatic image and the second row (row 1) of the Bayer color image from sparse color image 1210. The sparse-to-monochromatic filter may use pixel data (e.g., Sparse(E) to Sparse(H)) of the panchromatic pixels in row 1 of sparse color image 1210 as the pixel data (e.g., Mono(E) to Mono(H)) of pixels in row 1 of the monochromatic image.

As indicated by the arrows in FIG. 12B and described above with respect to FIG. 11, the pixel data of the first pixel (e.g., green pixel) in row 1 of the Bayer color image may be determined using the pixel data (e.g., Sparse(I)) of the first pixel (e.g., a green pixel) in row 2 of sparse color image 1210, pixel data (e.g., Mono(I)) of the first pixel in row 2 of the monochromatic image, and the pixel data (e.g., Mono(E) = Sparse(E)) of the first pixel (e.g., a panchromatic pixel) in row 1 of sparse color image 1210 (or the monochromatic image). As described above, pixel data (e.g., Mono(I)) of the first pixel in row 2 of the monochromatic image may be determined using pixel data of panchromatic pixels in rows 1-3 of sparse color image 1210 and may be saved to a buffer (e.g., monochromatic stream output buffer 955) for use by the re-mosaic filter.

The pixel data of the second pixel (e.g., a blue pixel) in row 1 of the Bayer color image may be determined based on pixel data (e.g., Sparse(K)) of the third pixel (e.g., a blue pixel) in row 2 of sparse color image 1210, pixel data (e.g., Mono(F)=Sparse(F)) of the second pixel (e.g., a panchromatic pixel) in row 1 of sparse color image 1210 (or the monochromatic image), and pixel data (e.g., Mono(K)) of the third pixel in row 2 of the monochromatic image. Pixel data (e.g., Mono(K)) of the third pixel in row 2 of the monochromatic image may be determined using pixel data of panchromatic pixels in rows 1-3 of sparse color image 1210 and may be saved to a buffer (e.g., monochromatic stream output buffer 955) for use by the re-mosaic filter.

The pixel data of the third pixel (e.g., a green pixel) in row 1 of the Bayer color image may be determined based on pixel data (e.g., Sparse(C)) of the third pixel (e.g., a green pixel) in row 0 of sparse color image 1210, the pixel data (e.g., Mono(G)=Sparse(G)) of the third pixel (e.g., a panchromatic pixel) of row 1 of sparse color image 1210 (or the monochromatic image), and the pixel data (e.g., Mono(C)) of the third pixel of row 0 of the monochromatic image. As described above with respect to FIGS. 7 and 12A, the pixel data (e.g., Mono(C)) of the third pixel of row 0 of the monochromatic image may have been determined by the sparse-to-monochromatic filter using pixel data of panchromatic pixels in row 0 and row 1 of sparse color image 1210 before pixel data of pixels in row 0 of the Bayer color image is determined.

The pixel data of the fourth pixel (e.g., a blue pixel) in row 1 of the Bayer color image may be determined based on pixel data (e.g., Sparse(K)) of the third pixel (e.g., a blue pixel) in row 2 of sparse color image 1210, pixel data (e.g., Mono(H)=Sparse(H)) of the fourth pixel (e.g., a panchromatic pixel) in row 1 of sparse color image 1210 (or the monochromatic image), and pixel data (e.g., Mono(K)) of the third pixel in row 2 of the monochromatic image. Pixel data (e.g., Mono(K)) of the third pixel in row 2 of the monochromatic image may have been determined using pixel data of panchromatic pixels in rows 1-3 of sparse color image 1210 before the pixel data of the second pixel in row 1 of the Bayer color image is determined.

Pixel data for other pixels in row 1 of the Bayer color image may be generated in similar manners. Therefore, pixel data of pixels in row 1 of the Bayer color image may be determined using pixel data of pixels in rows 0-2 of sparse color image 1210 and pixel data of pixels in rows 0 and 2 of the monochromatic image, which may in turn be determined using pixel data of panchromatic pixels in rows 0-3 of sparse color image 1210. As such, pixel data of pixels in row 1 of the Bayer color image and pixel data of pixels in row 1 of the monochromatic image can be determined after pixel data of pixels in rows 0-3 of sparse color image 1210 is received by the image filters.

**FIG. 12C** shows an example of generating the third row (row 2) of the monochromatic image and the third row (row 2) of the Bayer color image from sparse color image 1210. As described above with respect to FIGS. 7A, 7B, 12B, monochromatic pixel data (e.g., Mono(I), Mono(K), and Mono(I right)) for pixels in the third row (row 2) of the monochromatic image and at locations that correspond to color pixels (e.g., blue and green pixels) in sparse color image 1210 may have been determined by the sparse-to-monochromatic filter using pixel data of panchromatic pixels in rows 1-3 of sparse color image 1210 before pixel data of pixels in row 1 of the Bayer color image is determined, and may have been saved to a buffer (e.g., monochromatic stream output buffer 955) for use by the re-mosaic filter.

As indicated by arrows in FIG. 12C and described above with respect to FIG. 11, the pixel data of the first pixel (e.g., a red pixel) in row 2 of the Bayer color image may be determined using pixel data (e.g., Mono(I)) of the first pixel in row 2 of the monochromatic image, pixel data (e.g., Sparse(A)) of the first pixel in row 0 of sparse color image 1210, pixel data (e.g., Mono(A)) of the first pixel in row 0 of the monochromatic image, pixel data (e.g., Sparse(A_bottom)) of the first pixel in row 4 of sparse color image 1210, and pixel data (e.g., Mono(A_bottom)) of the first pixel in row 4 of the monochromatic image. The pixel data (e.g., Mono(A)) of the first pixel in row 0 of the monochromatic image may have been determined using pixel data of panchromatic pixels in rows 0 and 1 of sparse color image 1210 and saved to a buffer (e.g., monochromatic stream output buffer 955) as described above with respect to FIG. 12A. Pixel data (e.g., Mono(I)) of the first pixel in row 2 of the monochromatic image may have been determined using pixel data of panchromatic pixels in rows 1-3 of sparse color image 1210 and saved to a buffer as described above with respect to FIG. 12B. Pixel data (e.g., Mono(A_bottom)) of the first pixel in row 4 of the monochromatic image may be determined using pixel data of panchromatic pixels in rows 3-5 of sparse color image 1210 and saved to a buffer for use by the re-mosaic filter.

The pixel data of the second pixel (e.g., a green pixel) in row 2 of the Bayer color image may be determined based on pixel data (e.g., Sparse(I)) of the first pixel (e.g., a green pixel) in row 2 of sparse color image 1210, pixel data (e.g., Mono(J)=Sparse(J)) of the second pixel (e.g., a panchromatic pixel) in row 2 of sparse color image 1210 (or the monochromatic image), and pixel data (e.g., Mono(I)) of the first pixel in row 2 of the monochromatic image. Pixel data (e.g., Mono(I)) of the first pixel in row 2 of the monochromatic image may have been determined using pixel data of panchromatic pixels in rows 1-3 of sparse color image 1210 and saved in a buffer as described above with respect to FIG. 12B.

The pixel data of the third pixel (e.g., a red pixel) in row 2 of the Bayer color image may be determined based on pixel data (e.g., Sparse(A) and Sparse(A right)) of the first and fifth pixels (e.g., red pixels) in row 0 of sparse color image 1210, pixel data (e.g., Sparse(A_bottom) and Sparse(A_bottom_right)) of the first and fifth pixels (e.g., red pixels) in row 4 of sparse color image 1210, pixel data (e.g., Mono(A) and Mono(A right)) of the first and fifth pixels of row 0 of the monochromatic image, pixel data (e.g., Mono(A_bottom) and Mono(A_bottom_right)) of the first and fifth pixels of row 4 of the monochromatic image, and pixel data (e.g., Mono(K)) of the third pixel of row 2 of the monochromatic image. Pixel data (e.g., Mono(A) and Mono(Aright)) of the first and fifth pixels of row 0 of the monochromatic image may have been determined using pixel data of panchromatic pixels in row 0 and row 1 of sparse color image 1210 and saved in a buffer as described above with respect to FIG. 12A. Pixel data (e.g., Mono(A_bottom) and Mono(A_bottom_right)) of the first and fifth pixels of row 4 of the monochromatic image may be determined using pixel data of panchromatic pixels in rows 3-5 of sparse color image 1210 as described above with respect to FIGS. 7A and 7B and saved to a buffer, and pixel data (e.g., Mono(K)) of the third pixel of row 2 of the monochromatic image may have been determined using pixel data of panchromatic pixels in rows 1-3 of sparse color image 1210 and saved in a buffer as described above with respect to FIG. 12B.

The pixel data of the fourth pixel (e.g., a green pixel) in row 2 of the Bayer color image may be determined based on pixel data (e.g., Sparse(I right)) of the fifth pixel (e.g., a green pixel) in row 2 of sparse color image 1210, the pixel data (e.g., Mono(L)=Sparse(L)) of the fourth pixel (e.g., a panchromatic pixel) in row 2 of sparse color image 1210 (or the monochromatic image), and pixel data (e.g., Mono(I right)) of the fifth pixel in row 2 of the monochromatic image. Pixel data (e.g., Mono(I right)) of the fifth pixel in row 2 of the monochromatic image may be determined (or may have been determined) using pixel data of panchromatic pixels in rows 1-3 of sparse color image 1210 and saved in a buffer as described above with respect to FIG. 12B.

Pixel data for other pixels in row 2 of the Bayer color image may be generated in similar manners. Therefore, pixel data of pixels in row 2 of the Bayer color image may be determined using pixel data of pixels in rows 0-4 of sparse color image 1210 and pixel data of pixels in rows 0, 2, and 4 of the monochromatic image, which may in turn be determined using pixel data of panchromatic pixels in rows 0-5 of sparse color image 1210. As such, pixel data of pixels in row 2 of the Bayer color image and pixel data of pixels in row 2 of the monochromatic image may be determined after pixel data of pixels in rows 0-5 of sparse color image 1210 is received by the image filters.

**FIG. 12D** shows an example of generating the fourth row (row 3) of the monochromatic image and the fourth row (row 3) of the Bayer color image from sparse color image 1210. The sparse-to-monochromatic filter may use pixel data (e.g., Sparse(M) to Sparse(P)) of the panchromatic pixels in row 3 of sparse color image 1210 as the pixel data (e.g., Mono(M) to Mono(P)) of pixels in row 3 of the monochromatic image.

As indicated by arrows in FIG. 12D and described above with respect to FIG. 11, the pixel data of the first pixel (e.g., green pixel) in row 3 of the Bayer color image may be determined using pixel data (e.g., Sparse(I)) of the first pixel (e.g., a green pixel) in row 2 of sparse color image 1210, pixel data (e.g., Mono(I)) of the first pixel in row 2 of the monochromatic image, and pixel data (e.g., Mono(M) = Sparse(M)) of the first pixel (e.g., a panchromatic pixel) in row 3 of sparse color image 1210 (or the monochromatic image). As described above with respect to FIG. 12B, pixel data (e.g., Mono(I)) of the first pixel in row 2 of the monochromatic image may have been determined using pixel data of panchromatic pixels in rows 1-3 of sparse color image 1210 and saved in a buffer (e.g., monochromatic stream output buffer 955).

The pixel data of the second pixel (e.g., a blue pixel) in row 3 of the Bayer color image may be determined based on pixel data (e.g., Sparse(K)) of the third pixel (e.g., a blue pixel) in row 2 of sparse color image 1210, pixel data (e.g., Mono(N)=Sparse(N)) of the second pixel (e.g., a panchromatic pixel) in row 3 of sparse color image 1210 (or the monochromatic image), and pixel data (e.g., Mono(K)) of the third pixel in row 2 of the monochromatic image. As described above with respect to FIG. 12B, pixel data (e.g., Mono(K)) of the third pixel in row 2 of the monochromatic image may have been determined using pixel data of panchromatic pixels in rows 1-3 of sparse color image 1210 and saved in a buffer (e.g., monochromatic stream output buffer 955).

The pixel data of the third pixel (e.g., a green pixel) in row 3 of the Bayer color image may be determined based on pixel data (e.g., Sparse(C_bottom)) of the third pixel (e.g., a green pixel) in row 4 of sparse color image 1210, pixel data (e.g., Mono(O)=Sparse(O)) of the third pixel (e.g., a panchromatic pixel) of row 3 of sparse color image 1210 (or the monochromatic image), and pixel data (e.g., Mono(C_bottom)) of the third pixel of row 4 of the monochromatic image. As described above with respect to FIGS. 7A and 7B, the pixel data (e.g., Mono(C_bottom)) of the third pixel of row 4 of the monochromatic image may be determined by the sparse-to-monochromatic filter using pixel data of panchromatic pixels in rows 3-5 of sparse color image 1210 and saved to a buffer for use by the re-mosaic filter.

The pixel data of the fourth pixel (e.g., a blue pixel) in row 3 of the Bayer color image may be determined based on pixel data (e.g., Sparse(K)) of the third pixel (e.g., a blue pixel) in row 2 of sparse color image 1210, pixel data (e.g., Mono(P)=Sparse(P)) of the fourth pixel (e.g., a panchromatic pixel) in row 3 of sparse color image 1210 (or the monochromatic image), and pixel data (e.g., Mono(K)) of the third pixel in row 2 of the monochromatic image. As described above, pixel data (e.g., Mono(K)) of the third pixel in row 2 of the monochromatic image may have been determined using pixel data of panchromatic pixels in rows 1-3 of sparse color image 1210 and saved in a buffer (e.g., monochromatic stream output buffer 955).

Pixel data for other pixels in row 3 of the Bayer color image may be generated in similar manners. Therefore, pixel data of pixels in row 3 of the Bayer color image may be determined using pixel data of pixels in rows 2-4 of sparse color image 1210 and pixel data of pixels in rows 2 and 4 of the monochromatic image, which may in turn be determined using pixel data of panchromatic pixels in rows 1-5 of sparse color image 1210. As such, pixel data of pixels in row 3 of the Bayer color image and pixel data of pixels in row 3 of the monochromatic image may be determined after pixel data of panchromatic pixels in rows 1-5 of sparse color image 1210 is received by the image filters.

FIGS. 12A-12D show that the re-mosaic filter may operate parallelly with the sparse-to-monochromatic filter to share some input data with the sparse-to-monochromatic filter, and may use monochromatic image data that has already been generated by the sparse-to-monochromatic filter. Therefore, the total local memory space used by the sparse-to-monochromatic filter and the re-mosaic filter may be reduced, and the amount of computation of the re-mosaic filter may be reduced since it can use intermediate results computed by the sparse-to-monochromatic filter.

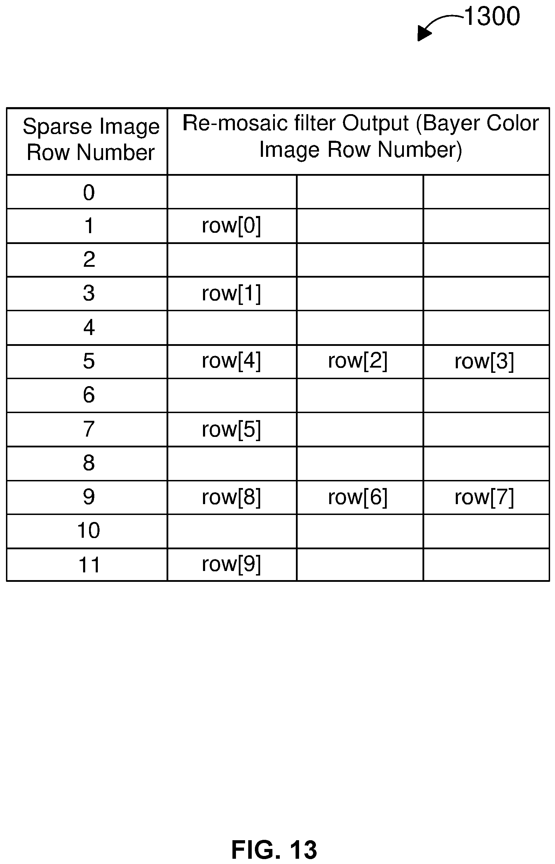

**FIG. 13** includes a table 1300 that shows row numbers of a Bayer color image generated by a re-mosaic filter after receiving input data of different rows of a sparse color image according to certain embodiments described above with respect to, for example, FIGS. 10-12D. As described with respect to FIGS. 11-12D and shown in FIG. 13, the re-mosaic filter may generate row 0 of the Bayer color image after receiving row 1 of the sparse color image, generate row 1 of the Bayer color image after receiving row 3 of the sparse color image, generate rows 2, 3, and 4 of the Bayer color image after receiving row 5 of the sparse color image, generate row 5 of the Bayer color image after receiving row 7 of the sparse color image, generate rows 6, 7, and 8 of the Bayer color image after receiving row 9 of the sparse color image, generate row 9 of the Bayer color image after receiving row 11 of the sparse color image, and so on.

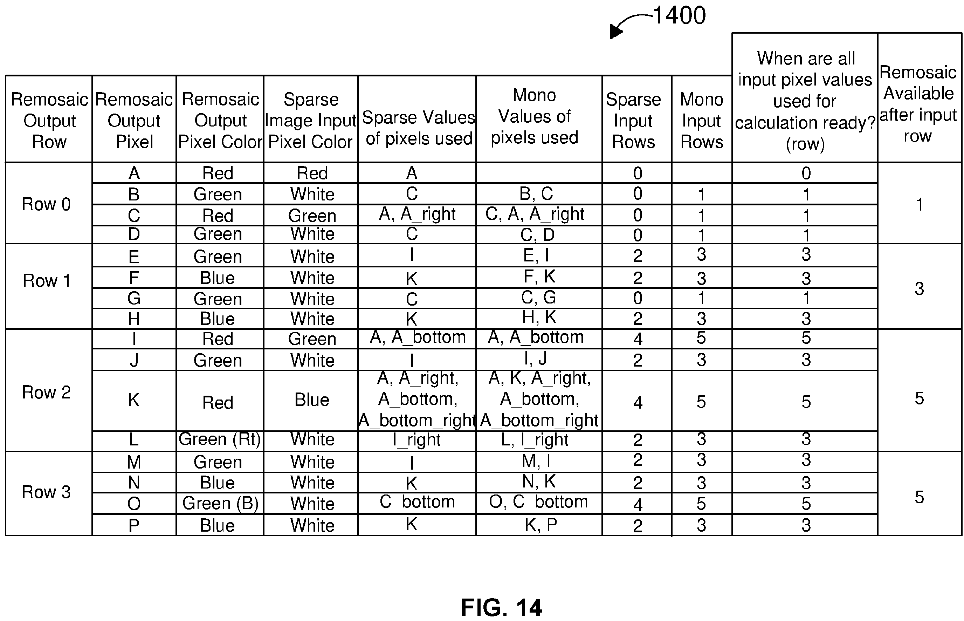

**FIG. 14** includes a table 1400 that summarizes data used by a re-mosaic filter (e.g., re-mosaic filter 1120) to convert a sparse color image into a Bayer color image according to certain embodiments described with respect to, for example, FIG. 10-12D. As shown in FIGS. 12B-14, row 1 of the Bayer color image may be generated after receiving row 3 of the sparse color image and may be generated using pixel data of row 0 (e.g., pixel C shown in FIGS. 10 and 11) of the sparse color image. Since pixel data of pixel C on row 0 of the sparse color image is no longer stored in the line buffer (e.g., line buffer 0 (910) and line buffer 1 (920)) after row 3 of the sparse color image is received, pixel data of pixel C of the sparse color image may need to be stored in additional storage devices (e.g., RAM, such as additional storage devices 940). In addition, rows 2 and 3 of the Bayer color image may be generated after receiving row 5 of the sparse color image and may be generated using pixel data of row 0 (e.g., pixel A and pixel A right) and row 2 (e.g., pixels I and K) of the sparse color image. Since pixel data of pixels A, A_right, I, and K on rows 0 and 2 of the sparse color image is no longer stored in the line buffer (e.g., line buffer 0 (910) and line buffer 1 (920)) after row 5 of the sparse color image is received, pixel data of pixels A, A right, I, and K of the sparse color image may need to be stored in additional storage devices (e.g., RAM, such as additional storage devices 940).

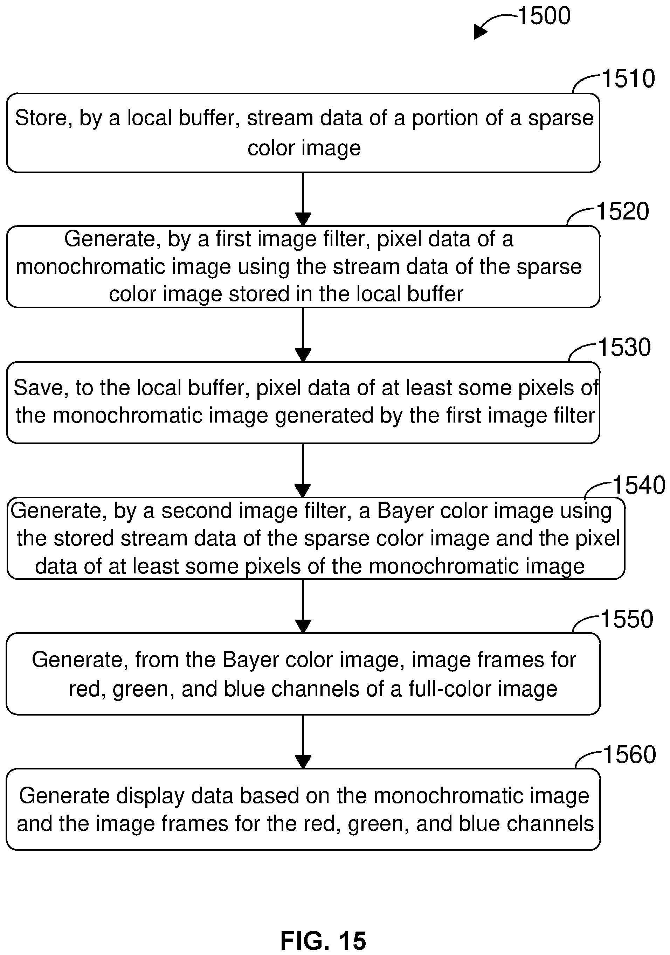

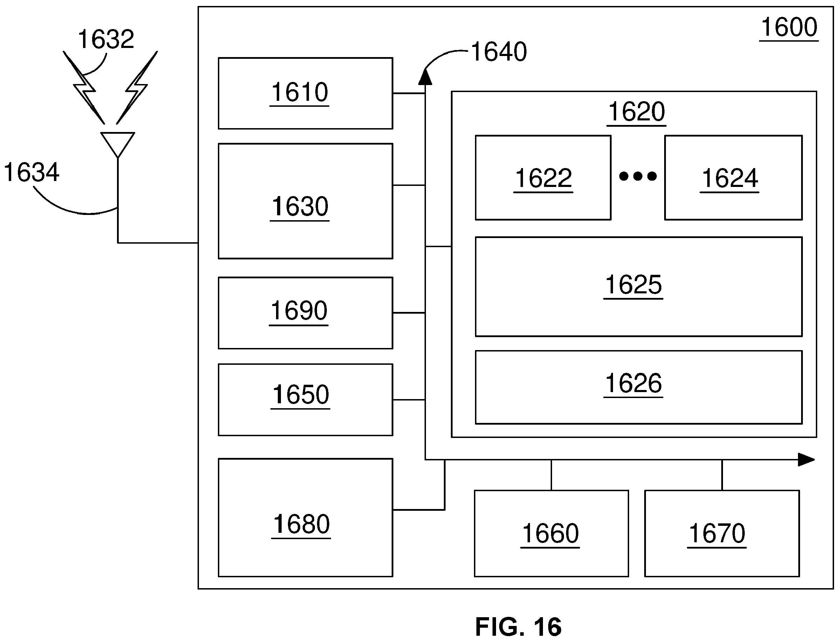

**FIG. 15** includes a flowchart 1500 illustrating an example of a method of image processing in an artificial reality system according to certain embodiments. The operations described in flowchart 1500 are for illustration purposes only and are not intended to be limiting. In various implementations, modifications may be made to flowchart 1500 to add additional operations, omit some operations, merge some operations, or split an operation. The operations described in flowchart 1500 may be performed by, for example, near-eye display 120, sensor devices 230, controller 235, sensors 410, image filters 480, application processor 420, hardware accelerator 600, or an electronic system 1600 of an example near-eye display described below with respect to FIG. 16.

At block 1510, a local buffer of a hardware accelerator may receive and store stream data of a portion of a sparse color image. The stream data of the sparse color image may include pixel data of panchromatic pixels and pixel data of color pixels, where the panchromatic pixels and the color pixels may be arranged in the sparse color image according to a pattern as shown in, for example, FIGS. 5B and 5C, 6-8, and 10-12. In some embodiments, the sparse color image may be a sparse color image of an environment of a display system captured by an image sensor that includes a sparse color filter array. In some embodiments, the local buffer may include random-access memory. In some embodiments, the local buffer may include two or more line buffers, where each line buffer of the two or more line buffers may include a plurality of shift registers, the output of a buffer register being connected to an input of a next buffer register such that pixel data may be shifted from a buffer register to the next buffer register in a line buffer. In some embodiments, the output of a first line buffer may be connected to an input of a second line buffer such that pixel data may be shifted from the first line buffer into the second line buffer. In some embodiments, the local buffer may also include additional storage devices, such as RAM devices and/or registers. The additional storage devices may be used to store, for example, intermediate results and pixel data of the sparse color image that may be needed at a later time but may have been shifted out the line buffers and thus may no longer be available in the line buffers when needed. In some embodiments, the local buffer may also include a buffer for storing output data of one or more image filter or image converters.

At block 1520, a first image filter (e.g., sparse-to-monochromatic filter 610, 720, or 950 described above) of the hardware accelerator may generate pixel data of a monochromatic image using the stream data of the portion of sparse color image stored in the local buffer, while the local buffer continues to receive, store, and shift stream data of other portions of the sparse color image. In some embodiments, the first image filter may include a logic circuit (e.g., a combinational logic circuit) connected to the local buffer. In some embodiments, to generate the pixel data for a pixel in the monochromatic image corresponding to a color pixel in the sparse color image, the first image filter may determine a first gradient based on pixel data of panchromatic pixels adjacent to and on the left of the color pixel and pixel data of panchromatic pixels adjacent to and on the right of the color pixel in the sparse color image, determine a second gradient based on pixel data of panchromatic pixels adjacent to and above the color pixel and pixel data of panchromatic pixels adjacent to and below the color pixel in the sparse color image, and set the pixel data for the pixel in the monochromatic image to (1) an average of pixel data of two panchromatic pixels adjacent to and on a same row as the color pixel in the sparse color image if the first gradient is less than the second gradient, or (2) an average of pixel data of two panchromatic pixels adjacent to and in a same column as the color pixel in the sparse color image if the first gradient is equal to or greater than the second gradient. In some embodiments, a clock frequency of the first image filter may be lower than a clock frequency of the local buffer, such as about a half of the clock frequency of the local buffer.

At block 1530, pixel data of at least some pixels (e.g., pixels corresponding to color pixels in the sparse color image) of the monochromatic image generated by the first image filter may be saved to the local buffer, such that the pixel data may be used by a second image filter (e.g., re-mosaic filter 630 or 1120) to generate a Bayer color image.

At block 1540, the second image filter (e.g., re-mosaic filter 630, sparse-to-Bayer filter 960, or re-mosaic filter 1120 described above) may generate a Bayer color image using the stream data of the sparse color image stored in the local buffer and the pixel data of at least some pixels of the monochromatic image stored in the local buffer. In some embodiments, the second image filter may include a logic circuit (e.g., a combinational logic circuit) connected to the local buffer. Operations in block 1540 may be performed in parallel with operations in blocks 1520 and 1530. In some embodiments, the second image filter may generate pixel data for green pixels of the Bayer color image based on pixel data of green pixels of the sparse color image, pixel data of pixels of the monochromatic image corresponding to the green pixels of the sparse color image, and pixel data of panchromatic pixels of the sparse color image corresponding to the green pixels of the Bayer color image. In some embodiments, the second image filter may generate pixel data for blue pixels of the Bayer color image based on pixel data of blue pixels of the sparse color image, pixel data of pixels of the monochromatic image corresponding to the blue pixels of the sparse color image, and pixel data of panchromatic pixels of the sparse color image corresponding to the blue pixels of the Bayer color image. In some embodiments, the second image filter may generate pixel data for a set of red pixels of the Bayer color image based on pixel data of red pixels of the sparse color image, pixel data of pixels of the monochromatic image corresponding to the red pixels of the sparse color image, and pixel data of pixels of the monochromatic image corresponding to green and blue pixels of the sparse color image.

Optionally, at block 1550, a de-mosaic filter (e.g., de-mosaic filter 640) may generate, from the Bayer color image, image frames for red, green, and blue channels of a full-color image. In some embodiments, an IR image for tracking a body part or a controller may be generated from the monochromatic image and/or the Bayer color image.

Optionally, at block 1560, an application processor may generate display data based on the monochromatic image and the image frames for the red, green, and blue channels of the full-color image. In some embodiments, the application processor may generate the display data based on a position of the body part or the controller determined from the IR image for tracking as described above, for example, with respect to FIGS. 1-4.

Embodiments disclosed herein may be used to implement components of an artificial reality system or may be implemented in conjunction with an artificial reality system. Artificial reality is a form of reality that has been adjusted in some manner before presentation to a user, which may include, for example, a virtual reality, an augmented reality, a mixed reality, a hybrid reality, or some combination and/or derivatives thereof. Artificial reality content may include completely generated content or generated content combined with captured (e.g., real-world) content. The artificial reality content may include video, audio, haptic feedback, or some combination thereof, and any of which may be presented in a single channel or in multiple channels (such as stereo video that produces a three-dimensional effect to the viewer). Additionally, in some embodiments, artificial reality may also be associated with applications, products, accessories, services, or some combination thereof, that are used to, for example, create content in an artificial reality and/or are otherwise used in (*e.g.,* perform activities in) an artificial reality. The artificial reality system that provides the artificial reality content may be implemented on various platforms, including an HMD connected to a host computer system, a standalone HMD, a mobile device or computing system, or any other hardware platform capable of providing artificial reality content to one or more viewers.

**FIG. 16** is a simplified block diagram of an example electronic system 1600 of an example near-eye display (e.g., HMD device) for implementing some of the examples disclosed herein. Electronic system 1600 may be used as the electronic system of an HMD device or other near-eye displays described above. In this example, electronic system 1600 may include one or more processor(s) 1610 and a memory 1620. Processor(s) 1610 may be configured to execute instructions for performing operations at a plurality of components, and can be, for example, a general-purpose processor or microprocessor suitable for implementation within a portable electronic device. Processor(s) 1610 may be communicatively coupled with a plurality of components within electronic system 1600. To realize this communicative coupling, processor(s) 1610 may communicate with the other illustrated components across a bus 1640. Bus 1640 may be any subsystem adapted to transfer data within electronic system 1600. Bus 1640 may include a plurality of computer buses and additional circuitry to transfer data.

Memory 1620 may be coupled to processor(s) 1610. In some embodiments, memory 1620 may offer both short-term and long-term storage and may be divided into several units. Memory 1620 may be volatile, such as static random-access memory (SRAM) and/or dynamic random-access memory (DRAM) and/or nonvolatile, such as read-only memory (ROM), flash memory, and the like. Furthermore, memory 1620 may include removable storage devices, such as secure digital (SD) cards. Memory 1620 may provide storage of computer-readable instructions, data structures, program modules, and other data for electronic system 1600. In some embodiments, memory 1620 may be distributed into different hardware modules. A set of instructions and/or code might be stored on memory 1620. The instructions might take the form of executable code that may be executable by electronic system 1600, and/or might take the form of source and/or installable code, which, upon compilation and/or installation on electronic system 1600 (e.g., using any of a variety of generally available compilers, installation programs, compression/decompression utilities, etc.), may take the form of executable code.

In some embodiments, memory 1620 may store a plurality of application modules 1622 through 1624, which may include any number of applications. Examples of applications may include gaming applications, conferencing applications, video playback applications, or other suitable applications. The applications may include a depth sensing function or eye tracking function. Application modules 1622-1624 may include particular instructions to be executed by processor(s) 1610. In some embodiments, certain applications or parts of application modules 1622-1624 may be executable by other hardware modules 1680. In certain embodiments, memory 1620 may additionally include secure memory, which may include additional security controls to prevent copying or other unauthorized access to secure information.

In some embodiments, memory 1620 may include an operating system 1625 loaded therein. Operating system 1625 may be operable to initiate the execution of the instructions provided by application modules 1622-1624 and/or manage other hardware modules 1680 as well as interfaces with a wireless communication subsystem 1630 which may include one or more wireless transceivers. Operating system 1625 may be adapted to perform other operations across the components of electronic system 1600 including threading, resource management, data storage control and other similar functionality.

Wireless communication subsystem 1630 may include, for example, an infrared communication device, a wireless communication device and/or chipset (such as a Bluetooth^{®} device, an IEEE 802.11 device, a Wi-Fi device, a WiMax device, cellular communication facilities, etc.), and/or similar communication interfaces. Electronic system 1600 may include one or more antennas 1634 for wireless communication as part of wireless communication subsystem 1630 or as a separate component coupled to any portion of the system. Depending on desired functionality, wireless communication subsystem 1630 may include separate transceivers to communicate with base transceiver stations and other wireless devices and access points, which may include communicating with different data networks and/or network types, such as wireless wide-area networks (WWANs), wireless local area networks (WLANs), or wireless personal area networks (WPANs). A WWAN may be, for example, a WiMax (IEEE 802.16) network. A WLAN may be, for example, an IEEE 802.11x network. A WPAN may be, for example, a Bluetooth network, an IEEE 802.15x, or some other types of network. The techniques described herein may also be used for any combination of WWAN, WLAN, and/or WPAN. Wireless communications subsystem 1630 may permit data to be exchanged with a network, other computer systems, and/or any other devices described herein. Wireless communication subsystem 1630 may include a means for transmitting or receiving data, such as identifiers of HMD devices, position data, a geographic map, a heat map, photos, or videos, using antenna(s) 1634 and wireless link(s) 1632. Wireless communication subsystem 1630, processor(s) 1610, and memory 1620 may together comprise at least a part of one or more of a means for performing some functions disclosed herein.

Embodiments of electronic system 1600 may also include one or more sensors 1690. Sensor(s) 1690 may include, for example, an image sensor, an accelerometer, a pressure sensor, a temperature sensor, a proximity sensor, a magnetometer, a gyroscope, an inertial sensor (e.g., a module that combines an accelerometer and a gyroscope), an ambient light sensor, or any other similar module operable to provide sensory output and/or receive sensory input, such as a depth sensor or a position sensor. For example, in some implementations, sensor(s) 1690 may include one or more inertial measurement units (IMUs) and/or one or more position sensors. An IMU may generate calibration data indicating an estimated position of the HMD device relative to an initial position of the HMD device, based on measurement signals received from one or more of the position sensors. A position sensor may generate one or more measurement signals in response to motion of the HMD device. Examples of the position sensors may include, but are not limited to, one or more accelerometers, one or more gyroscopes, one or more magnetometers, another suitable type of sensor that detects motion, a type of sensor used for error correction of the IMU, or any combination thereof. The position sensors may be located external to the IMU, internal to the IMU, or any combination thereof. At least some sensors may use a structured light pattern for sensing.

Electronic system 1600 may include a display module 1660. Display module 1660 may be a near-eye display, and may graphically present information, such as images, videos, and various instructions, from electronic system 1600 to a user. Such information may be derived from one or more application modules 1622-1624, virtual reality engine 1626, one or more other hardware modules 1680, a combination thereof, or any other suitable means for resolving graphical content for the user (e.g., by operating system 1625). Display module 1660 may use LCD technology, LED technology (including, for example, OLED, ILED, µLED, AMOLED, TOLED, etc.), light emitting polymer display (LPD) technology, or some other display technology.

Electronic system 1600 may include a user input/output module 1670. User input/output module 1670 may allow a user to send action requests to electronic system 1600. An action request may be a request to perform a particular action. For example, an action request may be to start or end an application or to perform a particular action within the application. User input/output module 1670 may include one or more input devices. Example input devices may include a touchscreen, a touch pad, microphone(s), button(s), dial(s), switch(es), a keyboard, a mouse, a game controller, or any other suitable device for receiving action requests and communicating the received action requests to electronic system 1600. In some embodiments, user input/output module 1670 may provide haptic feedback to the user in accordance with instructions received from electronic system 1600. For example, the haptic feedback may be provided when an action request is received or has been performed.

Electronic system 1600 may include a camera 1650 that may be used to take photos or videos of a user, for example, for tracking the user's eye position. Camera 1650 may also be used to take photos or videos of the environment, for example, for VR, AR, or MR applications. Camera 1650 may include, for example, a complementary metal-oxide-semiconductor (CMOS) image sensor with a few millions or tens of millions of pixels. In some implementations, camera 1650 may include two or more cameras that may be used to capture 3-D images.

In some embodiments, electronic system 1600 may include a plurality of other hardware modules 1680. Each of other hardware modules 1680 may be a physical module within electronic system 1600. While each of other hardware modules 1680 may be permanently configured as a structure, some of other hardware modules 1680 may be temporarily configured to perform specific functions or temporarily activated. Examples of other hardware modules 1680 may include, for example, an audio output and/or input module (e.g., a microphone or speaker), a near field communication (NFC) module, a rechargeable battery, a battery management system, a wired/wireless battery charging system, etc. In some embodiments, one or more functions of other hardware modules 1680 may be implemented in software.

In some embodiments, memory 1620 of electronic system 1600 may also store a virtual reality engine 1626. Virtual reality engine 1626 may execute applications within electronic system 1600 and receive position information, acceleration information, velocity information, predicted future positions, or any combination thereof of the HMD device from the various sensors. In some embodiments, the information received by virtual reality engine 1626 may be used for producing a signal (e.g., display instructions) to display module 1660. For example, if the received information indicates that the user has looked to the left, virtual reality engine 1626 may generate content for the HMD device that mirrors the user's movement in a virtual environment. Additionally, virtual reality engine 1626 may perform an action within an application in response to an action request received from user input/output module 1670 and provide feedback to the user. The provided feedback may be visual, audible, or haptic feedback. In some implementations, processor(s) 1610 may include one or more GPUs that may execute virtual reality engine 1626.

In various implementations, the above-described hardware and modules may be implemented on a single device or on multiple devices that can communicate with one another using wired or wireless connections. For example, in some implementations, some components or modules, such as GPUs, virtual reality engine 1626, and applications (e.g., tracking application), may be implemented on a console separate from the head-mounted display device. In some implementations, one console may be connected to or support more than one HMD

In alternative configurations, different and/or additional components may be included in electronic system 1600. Similarly, functionality of one or more of the components can be distributed among the components in a manner different from the manner described above. For example, in some embodiments, electronic system 1600 may be modified to include other system environments, such as an AR system environment and/or an MR environment.

The methods, systems, and devices discussed above are examples. Various embodiments may omit, substitute, or add various procedures or components as appropriate. For instance, in alternative configurations, the methods described may be performed in an order different from that described, and/or various stages may be added, omitted, and/or combined. Also, features described with respect to certain embodiments may be combined in various other embodiments. Different aspects and elements of the embodiments may be combined in a similar manner. Also, technology evolves and, thus, many of the elements are examples that do not limit the scope of the disclosure to those specific examples.

Specific details are given in the description to provide a thorough understanding of the embodiments. However, embodiments may be practiced without these specific details. For example, well-known circuits, processes, systems, structures, and techniques have been shown without unnecessary detail in order to avoid obscuring the embodiments. This description provides example embodiments only, and is not intended to limit the scope, applicability, or configuration of the invention. Rather, the preceding description of the embodiments will provide those skilled in the art with an enabling description for implementing various embodiments. Various changes may be made in the function and arrangement of elements without departing from the spirit and scope of the present disclosure.

Also, some embodiments were described as processes depicted as flow diagrams or block diagrams. Although each may describe the operations as a sequential process, many of the operations may be performed in parallel or concurrently. In addition, the order of the operations may be rearranged. A process may have additional steps not included in the figure. Furthermore, embodiments of the methods may be implemented by hardware, software, firmware, middleware, microcode, hardware description languages, or any combination thereof. When implemented in software, firmware, middleware, or microcode, the program code or code segments to perform the associated tasks may be stored in a computer-readable medium such as a storage medium. Processors may perform the associated tasks.

It will be apparent to those skilled in the art that substantial variations may be made in accordance with specific requirements. For example, customized or special-purpose hardware might also be used, and/or particular elements might be implemented in hardware, software (including portable software, such as applets, etc.), or both. Further, connection to other computing devices such as network input/output devices may be employed.

With reference to the appended figures, components that can include memory can include non-transitory machine-readable media. The term "machine-readable medium" and "computer-readable medium" may refer to any storage medium that participates in providing data that causes a machine to operate in a specific fashion. In embodiments provided hereinabove, various machine-readable media might be involved in providing instructions/code to processing units and/or other device(s) for execution. Additionally or alternatively, the machine-readable media might be used to store and/or carry such instructions/code. In many implementations, a computer-readable medium is a physical and/or tangible storage medium. Such a medium may take many forms, including, but not limited to, nonvolatile media, volatile media, and transmission media. Common forms of computer-readable media include, for example, magnetic and/or optical media such as compact disk (CD) or digital versatile disk (DVD), punch cards, paper tape, any other physical medium with patterns of holes, a RAM, a programmable read-only memory (PROM), an erasable programmable read-only memory (EPROM), a FLASH-EPROM, any other memory chip or cartridge, a carrier wave as described hereinafter, or any other medium from which a computer can read instructions and/or code. A computer program product may include code and/or machine-executable instructions that may represent a procedure, a function, a subprogram, a program, a routine, an application (App), a subroutine, a module, a software package, a class, or any combination of instructions, data structures, or program statements.

Those of skill in the art will appreciate that information and signals used to communicate the messages described herein may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Terms, "and" and "or" as used herein, may include a variety of meanings that are also expected to depend at least in part upon the context in which such terms are used. Typically, "or" if used to associate a list, such as A, B, or C, is intended to mean A, B, and C, here used in the inclusive sense, as well as A, B, or C, here used in the exclusive sense. In addition, the term "one or more" as used herein may be used to describe any feature, structure, or characteristic in the singular or may be used to describe some combination of features, structures, or characteristics. However, it should be noted that this is merely an illustrative example and claimed subject matter is not limited to this example. Furthermore, the term "at least one of' if used to associate a list, such as A, B, or C, can be interpreted to mean A, B, C, or any combination of A, B, and/or C, such as AB, AC, BC, AA, ABC, AAB, AABBCCC, etc.

Further, while certain embodiments have been described using a particular combination of hardware and software, it should be recognized that other combinations of hardware and software are also possible. Certain embodiments may be implemented only in hardware, or only in software, or using combinations thereof. In one example, software may be implemented with a computer program product containing computer program code or instructions executable by one or more processors for performing any or all of the steps, operations, or processes described in this disclosure, where the computer program may be stored on a non-transitory computer readable medium. The various processes described herein can be implemented on the same processor or different processors in any combination.

Where devices, systems, components or modules are described as being configured to perform certain operations or functions, such configuration can be accomplished, for example, by designing electronic circuits to perform the operation, by programming programmable electronic circuits (such as microprocessors) to perform the operation such as by executing computer instructions or code, or processors or cores programmed to execute code or instructions stored on a non-transitory memory medium, or any combination thereof. Processes can communicate using a variety of techniques, including, but not limited to, conventional techniques for inter-process communications, and different pairs of processes may use different techniques, or the same pair of processes may use different techniques at different times.

The specification and drawings are, accordingly, to be regarded in an illustrative rather than a restrictive sense. It will, however, be evident that additions, subtractions, deletions, and other modifications and changes may be made thereunto without departing from the broader scope as set forth in the claims. Thus, although specific embodiments have been described, these are not intended to be limiting. Various modifications and equivalents are within the scope of the following claims.

## Claims

1. A device comprising:
a local buffer configured to receive and store stream data of a sparse color image, wherein the stream data of the sparse color image includes pixel data of panchromatic pixels and pixel data of color pixels, the panchromatic pixels and the color pixels arranged in the sparse color image according to a pattern;
a first circuit configured to generate, while the local buffer continues to receive and store the stream data of the sparse color image, pixel data of a monochromatic image using the stream data received and stored in the local buffer; and
a second circuit configured to generate, while the local buffer continues to receive and store the stream data of the sparse color image, pixel data of a Bayer color image using the stream data of the sparse color image received and stored in the local buffer and the pixel data of the monochromatic image.

2. The device of claim 1, wherein:
the local buffer is configured to store pixel data of at least some pixels of the monochromatic image generated by the first circuit; and
the second circuit is configured to generate the pixel data of the Bayer color image using the pixel data of at least some pixels of the monochromatic image stored in the local buffer.

3. The device of claim 1, wherein:
the local buffer includes two or more line buffers;
each line buffer of the two or more line buffers includes a plurality of shift registers; and
the two or more line buffers are cascaded;
wherein the local buffer includes random-access memory configured to store pixel data of color pixels that has been shifted out of the two or more line buffers.

4. The device of claim 1, wherein the first circuit is configured to generate pixel data for a pixel of the monochromatic image corresponding to a color pixel of the sparse color image by performing operations that include:
determining a first gradient based on pixel data of panchromatic pixels adjacent to and on the left of the color pixel and pixel data of panchromatic pixels adjacent to and on the right of the color pixel in the sparse color image;
determining a second gradient based on pixel data of panchromatic pixels adjacent to and above the color pixel and pixel data of panchromatic pixels adjacent to and below the color pixel in the sparse color image; and
setting the pixel data for the pixel of the monochromatic image to:
an average of pixel data of two panchromatic pixels adjacent to and on a same row as the color pixel in the sparse color image, in response to determining that the first gradient is less than the second gradient; or
an average of pixel data of two panchromatic pixels adjacent to and in a same column as the color pixel in the sparse color image, in response to determining that the first gradient is equal to or greater than the second gradient.

5. The device of claim 4, wherein the first circuit is configured to save the pixel data for the pixel in the monochromatic image to the local buffer for use by the second circuit.

6. The device of claim 1, wherein the second circuit is configured to generate pixel data for green pixels of the Bayer color image based on pixel data of green pixels of the sparse color image, pixel data of pixels of the monochromatic image corresponding to the green pixels of the sparse color image, and pixel data of panchromatic pixels of the sparse color image corresponding to the green pixels of the Bayer color image;
wherein the second circuit is configured to generate pixel data for blue pixels of the Bayer color image based on pixel data of blue pixels of the sparse color image, pixel data of pixels of the monochromatic image corresponding to the blue pixels of the sparse color image, and pixel data of panchromatic pixels of the sparse color image corresponding to the blue pixels of the Bayer color image; and
wherein the second circuit is configured to generate pixel data for a set of red pixels of the Bayer color image based on pixel data of red pixels of the sparse color image, pixel data of pixels of the monochromatic image corresponding to the red pixels of the sparse color image, and pixel data of pixels of the monochromatic image corresponding to green or blue pixels of the sparse color image.

7. The device of claim 1, wherein a clock frequency of the first circuit is lower than a clock frequency of the local buffer.

8. The device of claim 1, further comprising a de-mosaic filter circuit configured to generate, from the Bayer color image, image frames for red, green, and blue channels of a full-color image.

9. A display system comprising:
an image sensor including a sparse color filter array and configured to capture a sparse color image of an environment of the display system, the sparse color image including panchromatic pixels and color pixels arranged according to a pattern of the sparse color filter array;
an application processor configured to generate display data based on information in the sparse color image; and
an accelerator on the image sensor, the application processor, or another device, the accelerator comprising:
a local buffer configured to receive and store stream data of the sparse color image from the image sensor;
a first circuit configured to generate, while the local buffer continues to receive and store the stream data of the sparse color image, pixel data of a monochromatic image using the stream data received and stored in the local buffer; and
a second circuit configured to generate, while the local buffer continues to receive and store the stream data of the sparse color image, pixel data of a Bayer color image using the stream data received and stored in the local buffer and the pixel data of the monochromatic image.

10. The display system of claim 9, wherein:
the local buffer is configured to store pixel data of at least some pixels of the monochromatic image generated by the first circuit; and
the second circuit is configured to generate the Bayer color image using the pixel data of at least some pixels of the monochromatic image stored in the local buffer; and/or
wherein the local buffer includes two or more line buffers that are cascaded, each line buffer of the two or more line buffers including a plurality of shift registers.

11. The display system of claim 9, wherein the first circuit is configured to generate the pixel data for a pixel of the monochromatic image corresponding to a color pixel of the sparse color image by performing operations that include:
determining a first gradient based on pixel data of panchromatic pixels adjacent to and on the left of the color pixel and pixel data of panchromatic pixels adjacent to and on the right of the color pixel in the sparse color image;
determining a second gradient based on pixel data of panchromatic pixels adjacent to and above the color pixel and pixel data of panchromatic pixels adjacent to and below the color pixel in the sparse color image; and
setting the pixel data for the pixel of the monochromatic image to:
an average of pixel data of two panchromatic pixels adjacent to and on a same row as the color pixel in the sparse color image, in response to determining that the first gradient is less than the second gradient; or
an average of pixel data of two panchromatic pixels adjacent to and on a same column as the color pixel in the sparse color image, in response to determining that the first gradient is equal to or greater than the second gradient.

12. The display system of claim 9, wherein a clock frequency of the first circuit is lower than a clock frequency of the local buffer; and/or
wherein the accelerator further comprises a de-mosaic filter circuit configured to generate, from the Bayer color image, image frames for red, green, and blue channels of a full-color image.

13. The display system of claim 9, wherein the second circuit is configured to:
generate pixel data for green pixels of the Bayer color image based on pixel data of green pixels of the sparse color image, pixel data of pixels of the monochromatic image corresponding to the green pixels of the sparse color image, and pixel data of panchromatic pixels of the sparse color image corresponding to the green pixels of the Bayer color image;
generate pixel data for blue pixels of the Bayer color image based on pixel data of blue pixels of the sparse color image, pixel data of pixels of the monochromatic image corresponding to the blue pixels of the sparse color image, and pixel data of panchromatic pixels of the sparse color image corresponding to the blue pixels of the Bayer color image; and
generate pixel data for a set of red pixels of the Bayer color image based on pixel data of red pixels of the sparse color image, pixel data of pixels of the monochromatic image corresponding to the red pixels of the sparse color image, and pixel data of pixels of the monochromatic image corresponding to the green pixels or the blue pixels of the sparse color image.

14. The display system of claim 9, wherein the sparse color filter array includes a plurality of infrared filters that are configured to transmit infrared light and block visible light.

15. A method comprising:
storing, by a local buffer, stream data of a portion of a sparse color image, wherein the stream data of the portion of the sparse color image includes pixel data of panchromatic pixels and pixel data of color pixels, the panchromatic pixels and the color pixels arranged in the sparse color image according to a pattern;
generating, by a first image filter, pixel data of a portion of a monochromatic image using the stream data of the portion of the sparse color image stored in the local buffer;
saving, to the local buffer, pixel data of at least some pixels of the monochromatic image generated by the first image filter; and
generating, by a second image filter, a portion of a Bayer color image using the stream data of the portion of the sparse color image stored in the local buffer and the pixel data of at least some pixels of the monochromatic image stored in the local buffer.
